# EUROPÄISCHE PATENTSCHRIFT

(11) **EP 3 601 064 B1**
(45) Veröffentlichungstag und Bekanntmachung des Hinweises auf die Patenterteilung: **02.12.2020**
(21) Anmeldenummer: 18719431.1
(22) Anmeldetag: 15.03.2018
(51) Int. Cl.: B65G 1/137, B65B 5/06

(54) **VERFAHREN ZUM KONSOLIDIERTEN KOMMISSIONIEREN UND VERPACKEN VON ARTIKELN, KOMMISSIONIER- UND PACKANLAGE UND KOMMISSIONIERBEHÄLTER**
METHOD FOR CONSOLIDATED ORDER-PICKING AND PACKING OF ARTICLES, ORDER-PICKING AND PACKING SYSTEM AND ORDER-PICKING CONTAINER
PROCÉDÉ DE PRÉPARATION CONSOLIDÉE DE COMMANDES ET D'EMBALLAGE D'ARTICLES, INSTALLATION DE PRÉPARATION DE COMMANDES ET DE CONDITIONNEMENT ET CONTENANT DE PRÉPARATION DE COMMANDES

(30) Priorität: 21.03.2017 DE 102017002712
(43) Veröffentlichungstag der Anmeldung: 05.02.2020
(73) Patentinhaber: Dr. Thomas + Partner Gmbh & Co. KG, 76297 Stutensee (DE)
(72) Erfinder: WARMULLA, Karl, 76149 Karlsruhe (DE)
(74) Vertreter: mepat Patentanwälte
(86) Internationale Anmeldenummer: PCT/EP2018/000099
(87) Internationale Veröffentlichungsnummer: WO 2018/171933

(56) Entgegenhaltungen:
- EP-A1- 1 147 988
- DE-A1-102011 012 950
- DE-A1-102013 108 934
- Rubbermaid: "Ingredient Bins in Stock - ULINE", , 8. September 2013 (2013-09-08), XP055512981, Gefunden im Internet: URL:https://www.uline.com/BL_9/Ingredient- Bins [gefunden am 2018-10-05]
- Sydney Commercial Kitchens: "CAMBRO IBS27 102Lt Ingredient Bin", , 1. Oktober 2002 (2002-10-01), XP055512987, Gefunden im Internet: URL:https://www.sydneycommercialkitchens.c om.au/brands/Cambro/cambro-ibs27-102lt-ing redient-bin [gefunden am 2018-10-05]

## Beschreibung

Die Erfindung betrifft ein Verfahren zum konsolidierten Kommissionieren und Verpacken von Artikeln, eine Kommissionier- und Packanlage und eine Verwendung eines Kommissionierbehälters hierfür.

Aus dem Stand der Technik sind grundsätzlich Verfahren und Vorrichtungen zum Verpacken bekannt: So offenbart DE 10 146 790 A1 ein Verfahren und eine Vorrichtung zum Befüllen von quaderförmigen Behältern mit gefüllten Kuverts, die mit ihren Flächen aufeinanderliegend in den Behälter eingebracht werden, und die DE 100 19 485 A1 ein Verfahren und eine Vorrichtung zum Entladen und/oder Beladen von Tablaren, welche einen Boden, mindestens zwei gegenüberliegende Seitenwände und eine offene Oberseite zur Aufnahme mindestens eines Stückgutes aufweisen. Die DE 37 08 896 A1 schließlich betrifft eine Vorrichtung zum automatischen Füllen eines Behälters, insbesondere eines Pappkartons mit einem Gut, insbesondere einem gestapelten Gut, und zum Aufbringen eines die Wandungen des Behälters überlappenden Deckels auf den gefüllten Karton. Weiter offenbart die DE 39 411 39 A1 ein Verfahren zur Herstellung einer vollständig mit Kunststofffolie umhüllten, palettenlosen, mehrere Schichten aufeinandergestapelter Gegenstände enthaltenden Verpackungseinheit. Auch US 3 605 377 A offenbart eine automatische Packmaschine.

Aus dem Stand der Technik ist weiter bekannt, für das auftragsbedingte Zusammenstellen von Artikeln aus einem Artikelsortiment manuelle oder maschinelle Kommissioniersysteme zu verwenden. Bei den manuellen Systemen wird der Auftrag durch einen Mitarbeiter zusammengestellt. Maschinelle Systeme verwenden Kommissionierroboter, die basierend auf erhaltenen Auftragsdaten die entsprechenden Artikel aus Regalfächern entnehmen und in einen mitgeführten Kommissionierbehälter legen, oder Kommissionierautomaten, bei denen die Sortimentsartikel in Schächten neben einem Förderband bereitgestellt werden. Auf dem Förderband wird ein Kommissionierbehälter, der beispielsweise über einen Strichcode zuordenbar ist, an den Schächten vorbeibewegt, die gemäß dem Auftrag zum Öffnen angesteuert werden, um die gewünschten Artikel in den Kommissionierbehälter auszuwerfen.

Zum Versand der Artikel werden diese in der Regel in klassische Kartonpackmittel, beispielsweise Aufrichtschachteln und Folientüten eingesetzt. Die Verpackung der kommissionierten Artikel in diese Packmittel erfolgt in der Regel manuell an dezentralen Arbeitsplätzen durch Mitarbeiter. Um die Verpackung transportsicher zu machen und Schäden während des Versands zu vermeiden, muss nach Anordnung der Artikel, insbesondere bei Kleinaufträgen, die häufig nur ein bis vier Artikel enthalten, in dem Packmittel ausreichend Füllmaterial eingebracht werden, um das restliche Volumen des Packmittels auszufüllen. Bei dieser Art der Prozessierung werden beispielsweise für ein System mit einer Durchsatzleistung von 10.000 Artikeln pro Stunde mehrere Dutzend Mitarbeiter benötigt. Im heutigen Marktumfeld werden solche Sendungen unter sehr volatilen Bedingungen erstellt und teilweise mit dem Anspruch einer Belieferung am gleichen Tag verknüpft.

Die DE 38 13 309 A1 beschreibt ein Verfahren und eine Anordnung zur transportsicheren Verpackung von Kommissionen. Dabei werden eine Transportverpackung wie ein Karton mit offener Deckelwand bereitgestellt, die Artikel und darüber ein Folienbeutel in dem Karton angeordnet, ehe ein Deckel die Öffnung des Kartons verschließt. Der Folienbeutel weist ein schlauchartiges Mundstück auf, das nach außen aus dem Karton ragt, sodass der Folien beutel, nachdem der Deckel am Karton fixiert wurde, aufgeblasen und am Mundstück verschweißt werden kann, um so die Artikel im Karton vor dem Herumfallen während des Transports zu bewahren.

Der Versand von Artikeln findet üblicherweise in festen Transportverpackungen wie Kisten und Kartons statt, die allerdings nachteilig einen hohen Materialverbrauch bedingen und häufig ein Transportvolumen einnehmen, das im Hinblick auf das enthaltene Warenvolumen unnötig groß ist.

Um Waren in Beuteln versenden zu können, werden in WO 2013/070197 A1 ein System und ein Verfahren zur Beutelausgabe offenbart. Das Beutelausgabesystem weist eine Kiste und mehrere Beutelprotektoren auf. Ein Beutelprotektor besteht aus einer Bodenwand, die zur Stützung eines Beutels aus flexiblem Material ausgebildet ist, und zwei Seitenwänden, die von der Bodenwand aus aufeinander zu verlaufen, so dass sie sich an ihren oberen Enden zur Aufnahme eines Öffnungsabschnitts eines Beutels treffen. Die Waren in dem Beutel werden somit während des Transports durch den Beutelprotektor und die umgebende Kiste geschützt, in der die Beutelprotektoren aufgrund ihres sich verjüngenden Profils platzsparend abwechselnd mit der Bodenwand nach unten und nach oben angeordnet werden können.

Aus DE 10 2013 108 934 A1 sind ein System und ein Verfahren zum Kommissionieren von Artikeln bekannt, die in Auftrags- bzw. Kommissionierbehältern gepuffert werden. Dabei werden nach Eingang eines Auftrags ein Platz im Kommissionierbereich und ein Auftragsbehälter, der sich auf diesem Platz befindet, diesem Auftrag zugewiesen. Nach Übergabe aller auftragsgemäßen Artikel in den Auftragsbehälter wird dieser manuell auf eine Fördereinrichtung gestellt und zu einem Kontroll- und Packbereich transportiert, so dass der Platz im Kommissionierbereich für einen neuen Auftragsbehälter und einen neuen Auftrag frei wird. Die Verpackung der kommissionierten Artikel aus dem Auftragsbehälter in einer Transportverpackung wird nicht beschrieben. DE 10 2013 108 934 A1 offenbart eine Kommissionier- und Packanlage nach dem Oberbegriff des Anspruchs 5. Z

Nach wie vor ungelöst ist allerdings die Aufgabe, die gemäß einem Auftrag kommissionierten Artikel ohne Einsatz von Mitarbeitern in einer nicht steifen Transportverpackung wie einer Papiertüte, einer Tüte aus Karton oder einem Kunststoffbeutel bei Aufträgen aus mehreren Teilen in der angestrebten Durchsatzklasse, die bspw. von 10.000 Teilen pro Stunde ausgeht, transportsicher einzupacken.

Ausgehend von diesem Stand der Technik ist es Aufgabe der vorliegenden Erfindung, ein Verfahren bereitzustellen, bei dem die auftragsgemäß kommissionierten Artikel vollautomatisch und prozesssicher in einer Transportverpackung wie einer Papiertüte, einer Plastiktüte oder einem Kunststoffbeutel transportsicher eingepackt werden.

Diese Aufgabe wird durch ein Verfahren zum konsolidierten Kommissionieren und Verpacken von Artikeln mit den Merkmalen des Anspruchs 1 gelöst.

Die weitere Aufgabe, eine zur Durchführung des Verfahrens geeignete Vorrichtung bereitzustellen, wird durch die Kommissionier- und Packanlage mit den Merkmalen des unabhängigen Anspruchs 5 und durch die Verwendung eines Kommissionierbehafters mit den Merkmalen des unabhängigen Anspruchs 15 gelöst.

Weiterbildungen sind in den jeweiligen Unteransprüchen ausgeführt.

Bei einem erfindungsgemäßen Verfahren zum automatischen konsolidierten Kommissionieren und Verpacken von Artikeln zum Versand werden alle Verfahrensschritte automatisiert maschinell in einem kontinuierlichen Prozess durchgeführt, wobei ein Kommissionierbehälter bereitgestellt wird, in dem Artikel entsprechend einem Auftrag zusammengestellt werden. Die Bereitstellung eines Kommissionierbehälters zur konsolidierten Kommissionierung eines Auftrags aus einer Vielzahl von im Prozess befindlichen Kommissionierbehärtern erfolgt in dynamischer und stochastischer Weise,

Unter dem Begriff einer "konsolidierten Kommissionierung" wird die zeitsparende Zusammenfassung von Einzelteilen zu einem Ganzen verstanden, wenn beispielsweise mehrere Aufträge den gleichen Artikel enthalten, sodass die für die verschiedenen Aufträge erforderliche Anzahl dieser Artikel zusammen bereitgestellt werden, um dann in die Kommissionierbehälter, die den Aufträgen zugeordnet sind, übergeben zu werden.

Ein Kommissionierbehälter im erfindungsgemäßen Prozess kann bspw. über ein Identifikationsmerkmal wie beispielsweise ein Bar- oder QR-Code oder über einen RFID-Transponder identifiziert werden, etwa, um einem bestimmten Auftrag zugeordnet zu werden.

Zur Durchführung des Verfahrens wird
a) der Kommissionierbehälter an einem Übergabeplatz angeordnet, und es wird zumindest ein entsprechend dem Auftrag bereitgestellter Artikel in den Kommissionierbehälter überführt,
b) der mit zumindest einem Artikel gefüllte Kommissionierbehälter an einen vorbestimmten Einpackplatz verfahren und oberhalb des Einpackplatzes wird eine Transportverpackung mit einer nach unten weisenden Öffnung bereitgestellt. Die Transportverpackung ist so dimensioniert, dass sie den Kommissionierbehälter gut passend aufnehmen kann. Dann wird
c) der Kommissionierbehälter durch ihre Öffnung in die Transportverpackung überführt, und
d) der in der Transportverpackung angeordnete, gefüllte Kommissionierbehälter wird zu einer Umfüll- und Trennstation verfahren. Bei Schritt
e) wird der zumindest eine Artikel aus dem Kommissionierbehälter mittels einer 180°-Wende in Bezug auf die Vertikale in die Transportverpackung umgefüllt,
f) der Kommissionierbehälter von der Transportverpackung, in der nun der Artikel vorliegt, oder auch mehrere, getrennt, und
g) die Transportverpackung verschlossen.

Bei a) kann sich der Übergabeplatz bei Vorhandensein mehrerer Übergabeplätze durch die Prozessdynamik beliebig ergeben; die Prozessdynamik bestimmt den Platz. Die automatische Steuerung ordnet dabei jeden Auftrag einem bestimmten Kommissionierbehälter, nicht einem bestimmten Übergabeplatz zu, sodass die entsprechend einem Auftrag zu übergebenden Artikel an dem (beliebigen) durch die Prozessdynamik bestimmten Übergabeplatz übergeben werden, an dem der zugeordnete Kommissionierbehälter angeordnet ist. Damit dient jeder Kommissionierbehälter als dynamische Sorterendstelle im Sinne einer flexiblen Zielrutsche und wird nach erfolgter Artikelübergabe in die anderen, nachfolgenden Prozesszonen transportiert. Nach Entleerung der Kommissionierbehälter und der Trennung von der Transportverpackung kann der Kommissionierbehälter einem neuen Auftrag zugeordnet werden und zur entsprechenden Artikelübergabe an einen Übergabeplatz transportiert werden, der wiederum ein beliebiger, durch die Prozessdynamik bestimmter Übergabeplatz ist.

Das Verfahren ermöglicht das vollautomatische konsolidierte Kommissionieren und Verpacken bis zum versandfertig Machen einer beauftragten Artikelzusemrnenstelfung in Transportverpackungen wie beispielsweise Papier- oder Kunststofftüten oder Kunststoffbeutel oder auch z. B. sackartige Transportverpackungen, die aus einem nicht-starren Material bestehen und eine Füllöffnung aufweisen. In Bezug auf das zu versendende Volumen bringen diese Transportverpackungen den Vorteil mit, dass sie dem tatsächlichen Artikelvolumen angepasst werden können: So kann bspw. eine Papiertüte nach Befüllen von der Öffnung her umgefaltet oder umgeschlagen werden.

Erfindungsgemäß sollen durch den kontinuierlichen, getakteten Prozess, der sich in erster Linie auf den stetigen Transport des Kommissionierbehälters bezieht, vorbestimmte Durchlaufzeiten sichergestellt werden und der Mitarbeiterbedarf soll gesenkt werden, da alle Verfahrensschritte vollautomatisch durch eine oder mehrere Steuerungsvorrichtungen gesteuert bzw. in Verbindung mit geeigneter Sensorik geregelt ablaufen können.

Bevorzugt ist die Verwendung von Papiertüten, da so aus ökologischen Gründen auch auf Kunststofftüten bzw. -beutel verzichtet werden kann. Das Verfahren gestattet höchstmögliche Prozesssicherheit, vor allem auch für kritische Ware wie z. B, Schuhkartons mit losen Deckeln. Das Verfahren ist insbesondere vorteilhaft zur Abfertigung von kleinen Aufträgen mit einer Artikelanzahl unter fünf, lässt sich aber - je nach Artikelgröße auch bei Aufträgen mit größerer Artikelanzahl anwenden.

Die Kommissionierbehälter, die zur Durchführung des Verfahrens in einer entsprechenden Kommissionier- und Packanlage verwendet werden, können unterschiedlich ausgeführt sein. Abhängig von der Art der verwendeten Kommissionierbehälter können sich Vorrichtungen der Anlage und entsprechend auch einzelne Details der Verfahrensschritte unterscheiden. Eine Art eines verwendbaren Kommissionierbehälters hat einen Behältergrundkörper, der sich senkrecht zu seiner Bodenfläche erstreckt, wobei mit Bodenfläche die Außenbodenfläche, d. h. Standfläche des Kommissionierbehälters gemeint ist, mit der der Kommissionierbehälter auf einem Untergrund, beispielsweise einer Fördereinrichtung oder einem Bearbeitungsplatz steht. Hingegen weist eine andere Ausführung eines verwendbaren Kommissionierbehälters eine "Krängung" auf, d. h., dass der Behältergrundkörper um einen vorbestimmten Winkel, der nicht 90° ist, zur Bodenfläche geneigt ist. In beiden Ausführungsformen kann der Behältergrundkörper so ausgebildet sein, dass die durch den oberen Behälterrand begrenzte Öffnung gegenüber dieser Bodenfläche geneigt ist, sodass der Behälterrand (in Bezug auf die Bodenfläche) einen höchsten und niedrigsten Punkt oder zumindest eine höhere und eine niedrigere Kante aufweist. Des Weiteren kann in dem Grundkörper ein Keil am Innenboden angeordnet sein, sodass die Innenbodenfläche ebenfalls gegenüber der Bodenfläche des Kommissionierbehälters geneigt ist. In einer Weiterbildung des Verfahrens kann in Schritt a) der Kommissionierbehälter, der zur Artikelübergabe an den vorbestimmten Übergabeplatz verfahren wird, mit seiner Öffnung in Richtung einer Artikel-Zuliefervorrichtung gekippt werden, sodass der zumindest eine entsprechend dem Auftrag von der Zuliefervorrichtung bereitgestellte Artikel sanft in den Kommissionierbehälter rutscht. Für "krängende" Kommissionierbehälter kann gegebenenfalls auf das Kippen verzichtet werden - dies hängt von dem Kippwinkel ab, der für die Artikelübergabe vorgesehen ist und der vorzugsweise so gewählt wird, dass die Artikel möglichst sanft, aber auch ohne Stockung in den Kommissionierbehälter gleitet. D. h., dass auch ein "krängender" Kommissionierbehälter gekippt wird, wenn seine Neigung kleiner als der gewünschte Kippwinkel ist.

Bei Kommissionierbehältern, die an dem Behälterrand, der die Behälteröffnung begrenzt, einen niedrigsten Punkt oder eine niedrigere Kante und/oder einen Keil am Boden aufweisen, wird in Schritt a) der Kommissionierbehälter so an den Übergabeplatz verfahren, dass die Seite des Kommissionierbehälters zu der Artikel-Zuliefervorrichtung weist, die den niedrigsten Punkt bzw. die niedrigere Kante an dem Behälterrand aufweist, und/oder an der eine spitzwinklige Seite des Keils angeordnet ist. D. h., dass für den Fall, in dem der Kommissionierbehälter sowohl einen Behälterrand mit niedrigstem Punkt bzw. niedrigerer Kante als auch einen Keil aufweist, der Keil derart in dem Kommissionierbehälter angeordnet ist, dass die spitzwinklige Seite des Keils auf der Seite mit dem niedrigsten Punkt bzw. der niedrigeren Kante angeordnet ist.

Weitere Ausführungsformen des Verfahren können zumindest einen der folgenden Schritte umfassen:
- entsprechend dem Auftrag, d. h. der im Auftrag gelisteten Artikel, kann Schritt a) für zumindest einen weiteren Artikel an zumindest einem weiteren vorbestimmten Übergabeplatz oder auch an demselben Übergabeplatz wiederholt werden,
- vor Schritt b) kann der Kommissionierbehälter an einen vorbestimmten Zugabeplatz verfahren werden und dort kann eine Zugabe wie ein Lieferschein, eine Rechnung oder Werbemittel wie Flyer etc. in den Kommissionierbehälter überführt werden,
- in Schritt b) kann zum Bereitstellen der Transportverpackung die Selektion einer Transportverpackung mit einem bestimmten Format entsprechend einer Vorgabe, die durch ein Volumen oder eine Menge der Artikel des Auftrags definiert wird, aus einer Magazinvorrichtung, sowie das Aufspannen und Halten der Transportverpackung erfolgen,
- in Schritt c) kann die Anordnung des Kommissionierbehälters in der Transportverpackung durch eine Aufwärtsbewegung des Kommissionierbehälters zum Einführen in die Transportverpackung durch deren Öffnung erfolgen,
   während Schritt d) kann eine Etikettierstation passiert werden und die Transportverpackung etikettiert werden,
- in Schritt e) kann die Wendebewegung erfolgen, die bevorzugt um 180° durchgeführt wird, damit am Ende der Wendebewegung die Transportverpackung aufrecht (bzw. entsprechend "krängenden" Kommissionierbehälter geneigt) mit der Öffnung nach oben weisend angeordnet ist. Dies geschieht bevorzugt durch Führen und Fördern des in der Transportverpackung angeordneten, gefüllten Kommissionierbehälters in einer Halbloopingbahn, wobei ein Boden der Transportverpackung durch eine entsprechende Stabilisierungsbahn gestützt wird.
- in Schritt f) kann der Kommissionierbehälter von der Transportverpackung durch Herausheben getrennt werden. Dazu können der Kommissionierbehälter und die Transportverpackung entlang in Bezug auf die Vertikale divergierender Bahnen geführt und gefördert werden, wobei vorzugsweise der Kommissionierbehälter entlang einer ansteigenden Rampe und die Transportverpackung horizontal weiter geführt wird, um das Umfallen der Transportverpackung bzw. das Herausfallen der Artikel aus der Transportverpackung zu vermeiden. Für "krängende" Kommissionierbehälter kann die ansteigende Rampe auch in Bezug auf die Horizontale divergieren, um den Kommissionierbehälter parallel zur Erstreckung seines Grundkörpers aus der Transportverpackung zu ziehen und damit ein Verkanten zu vermeiden.
- In Schritt g) kann zum Verschließen der Transportverpackung diese bspw. von der Öffnungsseite her bis zu dem Artikel oder bis zu dem am nächsten zur Öffnung platzierten Artikel umgefaltet, geschlagen oder -gekrempelt werden. Bevorzugt wird danach der umgefaltete Abschnitt fixiert. Dies kann durch Kleben mit Klebstoff oder Doppelklebeband, Tackern oder vorzugsweise durch Nähen erfolgen.
- Parallel zu Schritt g) kann der entleerte Kommissionierbehälter unter Durchführung einer weiteren Wendebewegung in Bezug auf die Vertikale rückgeführt werden und zur Übergabestation zur Übernahme von Artikeln gemäß einem weiteren Auftrag verfahren werden.

Was in Schritt c) die Richtung der Aufwärtsbewegung des Kommissionierbehälters zum Einführen in die Transportverpackung betrifft, so kann die Richtung der Aufwärtsbewegung von der Ausführungsform des eingesetzten Kommissionierbehälters abhängig sein: Während ein Kommissionierbehälter mit einem sich senkrecht zur Bodenfläche erstreckenden Grundkörper senkrecht nach oben in die direkt darüber bereitgestellte Transportverpackung verfahren werden kann, wird ein "krängender" Kommissionierbehälter mit einem gegenüber der Vertikalen gekippten Grundkörper in einer mit einer horizontalen Bewegungskomponente überlagerten Aufwärtsbewegung, also auf einem schrägen Aufwärtskurs, bewegt werden, um in eine entsprechend geneigt und in Bezug auf den Einpackplatz versetzt bereitgestellte Transportverpackung eingeführt werden zu können. Die Neigung des schrägen Aufwärtskurses sowie der Versatz der bereitgestellten Transportverpackung vom Einpackplatz sind von der Neigung des Kommissionierbehälters abhängig. Alternativ ist für einen krängenden Kommissionierbehälter denkbar, die Transportverpackung zwar geneigt, aber senkrecht direkt oberhalb des Einpackplatzes vorzusehen, wenn die Aufwärtsbewegung beispielsweise einem Zick-Zack-Kurs folgt, um den gekippten Grundkörper in die Transportverpackung einführen zu können.

Eine erfindungsgemäße Kommissionier - und Packanlage zum automatischen konsolidierten Kommissionieren und Verpacken von Artikeln zum Versand weist Kommissionierbehälter und mehrere Fördereinrichtungen für Kommissionierbehälter sowie Zuliefer- und Übergabevorrichtungen für Artikel und eine Steuerungsvorrichtung zur Steuerung der gesamten Anlage zum automatischen konsolidierten Kommissionieren und Verpacken von Artikeln zum Versand in einem kontinuierlichen Prozess auf. Dabei verbinden die Fördereinrichtungen für Kommissionierbehälter zumindest eine Übergabestation zur Übergabe der Artikel in die Kommissionierbehälter und zumindest eine Einpackstation zum Verpacken der Artikel in einer Transportverpackung. Erfindungsgemäß weist die Einpackstation, die das Einpacken in die Transportverpackungen ermöglicht, einen Einpackplatz für den Kommissionierbehälter auf, über dem eine Vorrichtung zum Bereitstellen einer Transportverpackung mit einer nach unten weisenden Öffnung angeordnet ist. Die Öffnung der Transportverpackung ist zur Aufnahme des Kommissionierbehälters dimensioniert. Damit der Kommissionierbehälter In der Transportverpackung aufgenommen werden kann, sind der Einpackplatz oder die Vorrichtung zur Bereitstellung der Transportverpackung oder beide zur Ausführung einer Bewegung aufeinander zu ausgebildet.

Vorzugsweise ist in einer Ausführungsform der Einpackplatz aufwärts verfahrbar, während die Transportverpackung stationär gehalten wird.

Um die in dem Kommissionierbehälter zusammengestellten Artikel in die Transportverpackung zu überführen, weist die Kommissionier- und Packanlage eine Umfüll- und Trennstation auf, die sich über Fördereinrichtungen für Kommissionierbehälter an die Einpackstation anschließt, und die eine Wendevorrichtung für die Kommissionierbehälter zur Durchführung einer Wendebewegung in Bezug auf die Vertikale und nachfolgend eine Trennvorrichtung zur Trennung des Kommissionierbehälters von der Transportverpackung aufweist.

Ferner kann die Kommissionier- und Packanlage eine Rückführeinrichtung für die Kommissionierbehälter aufweisen, die eine zweite Wendevorrichtung für die Kommissionierbehälter zur Durchführung einer Wendebewegung in Bezug auf die Vertikale aufweist.

Alternativ oder zusätzlich kann die Kommissionier- und Packanlage eine Verschließstation aufweisen, die sich zum Verschließen der Transportverpackung über entsprechende Fördereinrichtungen an die Umfüll- und Trennstation anschließt.

Die Verschließstation verfügt bevorzugt über eine Vorrichtung zum Umschlagen oder Umkrempeln der Transportverpackung von der Öffnungsseite her entsprechend einem durch den zumindest einen Artikel in der Transportverpackung eingenommenen Füllvolumen sowie eine Vorrichtung zum Fixieren des Umschlags, etwa durch Kleben, Verschweißen, Tackern oder vorzugsweise Nähen.

Die Übergabestation kann eine Mehrzahl Übergabeplätze aufweisen, denen - zumindest für die Ausführungsform mit nicht krängendem Kommissionierbehälter-jeweils eine Kipprampe zugeordnet ist, die eine Ebene des Übergabeplatzes mit einer darüber liegenden Ebene einer Zuliefervorrichtung für die Artikel allein oder in Zusammenwirken mit einer Übergabevorrichtung der Zuliefervorrichtung in einem vorbestimmten Neigungswinkel verbindet, wobei die Kipprampe dazu ausgebildet ist, den Kommissionierbehälter in dem vorbestimmten Neigungswinkel zu stützen, wobei eine Öffnung des Kommissionierbehälters zur Aufnahme der Artikel in Richtung der Zuliefervorrichtung weist, und nach erfolgter Befüllung wieder aufzurichten. Auch die Übergabeplätze sind durch Fördereinrichtungen verbunden. Selbstverständlich können erfindungsgemäße Anlagen auch für "krängende" Kommissionierbehälter, deren Grundkörper gegenüber der Vertikalen geneigt ist, an den Übergabeplätzen Kipprampen aufweisen; abhängig von dem Ausmaß der Neigung der "krängenden" Kommissionierbehälter kann jedoch gegebenenfalls auf Kipprampen verzichtet werden und die Obergabeplätze entsprechend dem "krängenden" Kommissionierbehälter derart in Bezug zur Zuliefervorrichtung bzw. deren Übergabevorrichtung eingerichtet werden, dass die Öffnung des "krängenden" Kommissionierbehälters entsprechend zur Aufnahme der Artikel in Richtung der Zuliefervorrichtung weist. Grundsätzlich ist bei der Einrichtung der Anlage darauf zu achten, dass die "krängenden" Kommissionierbehälter entsprechend korrekt orientiert eingesetzt werden. Gegebenenfalls kann auch hierfür eine automatisierte Vorrichtung eingesetzt werden, die die Neigungsrichtung der "krängenden" Kommissionierbehälter feststellt und diese in der korrekten Orientierung in die Anlage einsetzt, damit die Behälteröffnung an den Bearbeitungsplätzen in die richtige Richtung weist.

Die Kommissionier- und Packanlage kann ferner eine Zugabestation für eine vorbestimmte Zugabe aufweisen, die entlang der Fördereinrichtungen zwischen der Übergabestation und der Einpackstation angeordnet ist. Alternativ oder zusätzlich kann die Kornmissionier- und Packanlage eine Etikettierstation zum Etikettieren der Transportverpackung aufweisen, die entlang der Fördereinrichtungen zwischen der Einpackstation und der Umfüll- und Trennstation angeordnet ist.

Die Zugabestation kann in einer Weiterbildung eine Druckervorrichtung zum Ausdrucken von Begleitformularen aufweisen, wobei die Druckervorrichtung derart ausgerichtet und/oder ausgebildet ist, dass eine Formularausgabe oberhalb einer durch die Öffnung der entlang der Fördereinrichtungen geförderten Kommissionierbehälter definierten Ebene liegt.

Die Vorrichtung zur Bereitstellung der Transportverpackung kann eine Magazinvorrichtung mit Fächern für Transportverpackungen mit unterschiedlichen Formaten, eine Selektionsvorrichtung zur Auswahl und Vereinzelung einer Transportverpackung eines bestimmten Formats und eine Aufspann- und Halterungsvorrichtung für eine entfaltete Transportverpackung mit nach unten weisender Öffnung aufweisen. Die Vorrichtung zur Bereitstellung der Transportverpackung kann mittels entsprechender Sensorik ausgestattet sein, damit entsprechend der Vorgabe der Steuerungsvorrichtung nicht nur durch die Selektionsvorrichtung die passende Transportverpackung ausgewählt, vereinzelt und aufgespannt wird, sondern auch in jeder Magazinvorrichtung der Vorrat an Transportverpackungen überwacht und eine korrekte Zuordnung neuer Transportverpackungen, die stapelweise angeliefert werden, automatisch zu der jeweiligen Magazinvorrichtung erfolgen kann.

Für die Relativbewegung zwischen dem Einpackplatz und der Vorrichtung zur Bereitstellung der Transportverpackung sorgt zumindest eine Hubvorrichtung. Dabei ist oder sind der Einpackplatz oder die Vorrichtung zur Bereitstellung der Transportverpackung bzw. deren Aufspann- und Halterungsvorrichtung mit einer Hubvorrichtung verbunden oder damit verbindbar. Theoretisch können auch beide, Einpackplatz und Vorrichtung zur Bereitstellung der Transportverpackung bzw. deren Aufspann- und Halterungsvorrichtung, jeweils mit einer Hubvorrichtung verbunden sein. Eine bevorzugte Variante sieht allerdings vor, dass der Einpackplatz mit einer Hubvorrichtung verbunden ist, da diese Variante apparativ einfacher zu realisieren ist als eine bewegbare Vorrichtung zur Bereitstellung der Transportverpackung bzw. deren Aufspann- und Halterungsvorrichtung. Eine Hubvorrichtung kann einen oder mehrere Hubzylinder, Hubscheren und/oder eine Aufzugs- oder Liftvorrichtung, darunter beispielsweise zumindest einen Umlaufförderer, aufweisen.

Die Umfüll- und Trennstation kann als Wendevorrichtung eine Halbloopingbahn mit Führungsmitteln für den Kommissionierbehälter und eine parallel verlaufende Stabilisierungsbahn zur Stützung eines Bodens der Transportverpackung aufweisen.

Als Trennvorrichtung kann die Umfüll- und Trennstation bezüglich der Vertikalen divergierende Bahnen jeweils zur Führung und Förderung des Kommissionierbehälters und der Transportverpackung aufweisen, wobei sich die obere Bahn zur Führung und Förderung der Kommissionierbehälter an die Halbloopingbahn und die untere Bahn zur Führung und Förderung der Transportverpackung an die Stabilisierungsbahn anschließen. Dabei kann bevorzugt die obere Bahn zur Führung und Förderung der Kommissionierbehälter als ansteigende Rampe ausgebildet sein. In der für "krängende" Kommissionierbehälter ausgebildeten Trennvorrichtung kann die ansteigende Rampe auch in Bezug auf die Horizontale divergieren, um den Kommissionierbehälter parallel zur Erstreckung seines Grundkörpers aus der Transportverpackung zu ziehen und damit ein Verkanten zu vermeiden.

Die Führungsmittel in der Halbloopingbahn und in der oberen Bahn können bevorzugt seitliche Führungsschienen sein, die zum-Eingriff mit Rollvorrichtungen des Kommissionierbehälters, die an diesem in Bodennähe seitlich angeordnet sind, ausgebildet sein.

Alternativ zu den divergierenden Bahnen, die bezüglich der Längserstreckung einen relativ großen Platzbedarf haben, kann die Umfüll- und Trennstation als Trennvorrichtung eine platzsparende Liftvorrichtung für die Kommissionierbehälter aufweisen, die sich an die Halbloopingbahn anschließt. Für die Transportverpackungen ist unterhalb der Liftvorrichtung ein Halteplatz entlang einer Abförderbahn vorgesehen, die sich, wie bei den divergierenden Bahnen, an die Stabilisierungsbahn anschließt. Während der Kommissionierbehälter mit der Liftvorrichtung aus der Transportverpackung herausgezogen wird, verbleibt diese auf dem Halteplatz, ehe sie über die Abförderbahn zur Verschlussstation gefördert wird. Die Liftvorrichtung kann vorzugsweise zumindest einen Umlaufförderer aufweisen, der mit zumindest einem Eingriffselement für den Eingriff mit einem gewendeten Kommissionierbehälter ausgebildet ist. So ist es denkbar, dass ein Umlaufförderer eingesetzt werden kann, der mit dem Kommissionierbehälter nur auf einer Seite in Eingriff tritt. Vorzugsweise kann jedoch ein Paar Umlaufförderer eingesetzt werden, die beidseitig, gleichzeitig aufeinander abgestimmt, mit dem Kommissionierbehälter in Eingriff kommen, um diesen anzuheben. Je nach Art der verwendeten Kommissionierbehälter kann die Liftvorrichtung zur Ausführung einer senkrechten Aufwärtsbewegung (für "normale" Kommissionierbehälter) oder zur Ausführung einer schrägen Aufwärtsbewegung (für "krängende" Kommissionierbehälter) ausgebildet sein, wobei die Schräge der Auswärtsbewegung entsprechend an die Neigung des Kommissionierbehälters angepasst ist, um ein verkantungsfreies Herausziehen des Kommissionierbehälters aus der Transportverpackung zu ermöglichen.

Für den vollautomatisierten Betrieb ist vorgesehen, dass die Kommissionier- und Packanlange zumindest eine Steuerungsvorrichtung aufweist. Sämtliche Vorrichtungen und Fördereinrichtungen der erfindungsgemäßen Anlage sind mit der Steuerungsvorrichtung verbunden, um das Kommissionieren und Konsolidieren und Verpacken der Artikel zum Versand in einem kontinuierlichen Prozess vollautomatisch durchzuführen, wobei die Vorrichtungen und Fördereinrichtungen der Anlage vorzugsweise zumindest zum Teil mit einer Sensorik ausgestattet sind, die zur Regelung der Vorgänge mit der zumindest einen Steuerungsvorrichtung gekoppelt ist.

Dazu kann die Kommissionier- und Packanlage eine Sensorik, z. B. Lesegeräte, zur Erfassung eines zur Unterscheidung jedes Kommissionierbehälters eindeutigen Identifizierungsmerkmals aufweisen, bei dem es sich beispielsweise um einen an jedem Kommissionierbehälter angebrachten Bar-, QR-Code oder RFID-Chip handeln kann. Die entsprechenden Lesegeräte können dann an der Übergabestation an der Einpackstation, an jeder Zugabestation, Etikettierstation, Verschließstation und/oder an allen fördertechnischen Entscheidungspositionen entlang der Fördereinrichtungen zur Zuordnung der Kommissionierbehälter durch die Steuerungsvorrichtung angeordnet sein. Eine fördertechnische Entscheidungsposition entlang der Fördereinrichtungen liegt beispielsweise in der Übergabestation vor, die eine Vielzahl von parallel verwendbaren Übergabeplätzen aufweist. Mittels eines Lesegeräts, das entlang einer Fördereinrichtung stromaufwärts der Übergabestation geeignet platziert ist, können die Kommissionierbehälter über das jeweilige Identifizierungsmerkmal einem bestimmten Auftrag und einem Übergabeplatz zugeordnet werden, an dem die auftragsgemäße Artikelübergabe erfolgt. Alternativ könnte jeder Übergabeplatz mit einem Lesegerät zur Identifizierung des jeweiligen Kommissionierbehäiters ausgestattet sein. Weitere fördertechnischen Entscheidungspositionen entlang der Fördereinrichtungen liegen insbesondere in den Anlagenabschnitten bzw. Stationen vor, die ebenfalls mehrere Bearbeitungsstationen aufweisen, die parallel arbeiten und fördertechnisch parallel, z. B. über Weichen, in den Förderkreislauf eingebunden sind, sodass die Entscheidungspositionen, an denen entsprechende Lesegeräte zur Identifizierung vorzusehen sind, stromaufwärts dieser Weichen liegen. Anlagenabschnitte mit derartigen parallelen Bearbeitungsplätzen und den entsprechenden Entscheidungspositionen zur Zuordnung der Kommissionierbehälter können insbesondere die Zugabestation mit parallelen Zugabeplätzen, die Einpackstation mit parallelen Einpackplätzen und die Verschlussstation mit parallelen und/oder unterschiedlichen Verschlussvorrichtungen sein. Durch die Bearbeitungsstationen mit parallelen Bearbeitungsplätzen kann nicht nur der Bearbeitungsdurchsatz erhöht werden, sondern es kann auch ein Stillstand vermieden werden, wenn eine Störung an einem der Bearbeitungsplätze auftritt, da die Kommissionierbehälter dann den parallelen Bearbeitungsplätzen durch die Steuerungsvorrichtung zugeordnet werden können.

Alternativ oder zusätzlich kann die Übergabestation, vorzugsweise an den Übergabevorrichtungen, Sensorvorrichtungen aufweisen, die so platziert sind, dass eine erfolgte Artikelübergabe und/oder überstehende Artikel, die aus dem Kommissionierbehälter in der übergabeposition herausragen, erfasst werden können. Im ersten Fall wird die Steuerungsvorrichtung ein Aufrichten und Weiterfördern des gefüllten Kommissionierbehälters veranlassen. Im zweiten Fall wird der gefüllte Kommissionierbehälter von der Steuerungsvorrichtung, z. B. durch Betätigung der Kipprampe, zunächst auch aufgerichtet, um den überstehenden Artikel in den Behälter eingleiten zu lassen, dann aber wieder gekippt, um den Auftrag zu vervollständigen und/oder zu überprüfen, ob der Artikel noch übersteht. Erst wenn der Auftrag vollständig ist und kein Artikel mehr übersteht, wird der Kommissionierbehälter nach dem Aufrichten weitergefördert.

Eine weitere alternative oder zusätzliche Sensorik kann für die Vorrichtung zur Bereitstellung der Transportverpackung an jeder Magazinvorrichtung zur Überwachung eines Vorrats an Transportverpackungen und zur automatischen Zuordnung neuer Transportverpackungen vorgesehen sein. Insbesondere kann dazu jeder Kassettenträger zur Feststellung und Steuerung des Füllstands sowie der Position des jeweiligen Kassettenträgers eine entsprechende Sensorik aufweisen. Hierdurch kann durch die Steuerungsvorrichtung der erforderliche Nachschub an Transportverpackungen pünktlich disponiert werden, um Ausfälle oder Stillstände an den Einpackplätzen zu minimieren bzw. zu vermeiden.

Ferner kann die Kommissionier- und Packanlage - je nach Ausführungsart, wenn diese z. B, die Verwendung unterschiedlicher Transportverpackungsformate vorsieht -Sensorik für die Verschließstation zur Erfassung einer Höhe von vorbeigeförderten Transportverpackungen aufweisen, um die jeweilige Transportverpackung in Abhängigkeit ihres Formats einer geeigneten Verschlussvorrichtung zuzuordnen. Alternativ, wenn nur gleiche Verpackungsformate verwendet werden, oder zusätzlich dazu, kann die Verschließstation einen oder mehrere Füllhöhensensor(en) aufweisen, um die Füllhöhe der Artikel in der Transportverpackung zu erfassen, damit die Steuerungsvorrichtung die Anzahl der Umschläge zum Verschließen der Transportverpackung festlegen kann und die Transportverpackung den entsprechenden Vorrichtungen zum Umschlagen oder Umkrempeln der Transportverpackung von der Öffnungsseite her zuordnen kann.

Die hier genannten Ausführungsformen sind als vorteilhafte, aber nicht ausschließliche Beispiele zu verstehen - selbstverständlich kann weitere Sensorik zur Steuerung und Regelung der Kommissionier - und Packanlage vorgesehen sein, etwa Wägesensoren, wenn das Gewicht der in dem Kommissionierbehälter auftragsgemäß zusammengestellten Artikel für die Wahl des Verpackungsmaterials oder für den Versand von Interesse ist, oder Sensoreinrichtungen zur Feststellung von Betriebsstörungen der Vorrichtungen an den Bearbeitungsstationen oder der Fördereinrichtungen.

Eine erfindungsgemäße Verwendung eines Kommissionierbehalters sieht den Einsatz in einer erfindungsgemäßen Kommissionier- und Packanlage zur Durchführung eines erfindungsgemäßen Verfahrens vor. Der Kommissionierbehälter weist eine Öffnung auf, die gegenüber einer Bodenfläche des Kommissionierbehälters geneigt ist. Ferner weist der Kommissionierbehälter in Bodennähe seitliche Rollvorrichtungen auf, die zum Eingriff in die seitlichen Führungsschienen zur Förderung durch die Wende- und Trennvorrichtung ausgebildet sind.

Der Kommissionierbehälter kann einen Grundkörper aufweisen, der die geneigte Öffnung bereitstellt Zur Verbesserung der Standstabilität kann der Grundkörper, dessen Querschnitt dem Querschnitt der Transportverpackung entspricht, in einer die Standfläche vergrößernden wannenartigen Stabilisierungsvorrichtung angeordnet sein, die die Bodenfläche des Kommissionierbehälters bereitstellt. Die Rollvorrichtungen sind dann seitlich des Wannenrands angeordnet.

Der Grundkörper kann rechtwinklig zur Bodenfläche in der Stabilisierungsvorrichtung angeordnet sein, wobei die gegenüber der Bodenfläche des Kommissionierbehälters geneigte Öffnung dadurch bereitgestellt wird, dass ein die Öffnung begrenzender Behälterrand einen niedrigsten Punkt und einen höchsten Punkt aufweist, der eine Führungsecke zum Einfädeln in die Transportverpackung bildet.

Alternativ kann für einen "krängenden" Kommissionierbehälter der Grundkörper um einen vorbestimmten Winkel zur Bodenfläche, vorzugsweise in der Stabilisierungsvorrichtung, geneigt angeordnet sein, wobei die gegenüber der Bodenfläche des Kommissionierbehälters geneigte Öffnung mit einer niedrigeren Kante und einer höheren Kante bereitgestellt wird. Auch kann ein geneigter Grundkörper einen Behälterrand mit einem niedrigsten und einem höchsten Punkt aufweisen, um die Führungsecke zum Einfädeln bereitzustellen.

Die fixierte Schrägstellung des Grundkörpers ermöglicht es zu vermeiden, dass sich verpackungskritische Ware wie z. B. Schuhkartons mit losem Deckel nach der Überführung in den Kommissionierbehälter und auch während des weiteren Transports durch die Anlage öffnen, da die Artikel an einer Behälterwand anliegen, die die im geneigten Zustand "umtere" Behälterwand ist.

Um das Einfädeln in die Transportverpackung weiter zu verbessern, kann der Behälterrand um die Öffnung zumindest abschnittsweise Abrundungen aufweisen. So kann am Kommissionierbehälterrand an der Öffnungsseite ein umlaufender Wulst oder aber auch wulstartige Abschnitte vorgesehen sein, die das Einfädeln bzw. Überstülpen bspw. einer Papiertüte vereinfachen und diese zugleich schützen; dazu ist der Wulst nach oben verjüngt und an der Fläche, die die überzuziehende Papiertüte streift, abgerundet.

Um das Anliegen der Artikel an der unteren Behälterwand eines "krängenden" Kommissionierbehälters zu unterstützen, kann in dem Grundkörper ein Keil derart angeordnet sein, dass die spitzwinklige Seite des Keils auf der Seite des Grundkörpers angeordnet ist, die den niedrigsten Punkt oder die niedrigere Kante an dem die Öffnung begrenzenden Behälterrand aufweist.

Ein solcher Keil kann auch in einem "normalen" Kommissionierbehälter, dessen Grundkörper sich senkrecht erstreckt, angeordnet werden, um nach der Überführung der Artikel, wenn der Kommissionierbehälter wieder aufgerichtet wird, das ungewollte Öffnen der verpackungskritischen Ware zu vermindern. Vorteilhaft verhindert dieser Keil auch während des weiteren Transports durch die Anlage ein Kippen oder Verrutschen der Artikel im Kommissionierbehälter. Auch hier wird die spitzwinklige Seite des Keils auf der Seite des Grundkörpers angeordnet, die den niedrigsten Punkt an dem Behälterrand aufweist, da diese die "untere" Behälterwand ist, wenn der Kommissionierbehälter zur Überführung der Artikel zur Zuliefervorrichtung gekippt wird.

Vorzugsweise kann der Keil aus einem elastisch stoßdämpfenden Material, beispielsweise einem Schaumstoff, beschaffen sein, um den Aufschlag der eingefüllten Artikel zu dämpfen und die Kante des Deckels stabilisierend zu halten.

Der Kommissionierbehälter selbst kann aus einem Gerüst aus biegesteifem Material bestehen, das mit Wandungen und Bodenplatten beplankt ist, die aus Holz, Kunststoff, Metall oder anderen geeigneten Plattenmaterialien bestehen kann. Er kann aber auch ein einstückig gegossener Körper sein, dessen Form auch die "Einfädelhilfen" (Wulstabschnitte) umfasst, so dass lediglich die Rollen samt Befestigungen derselben als separate Teile anzubringen sind.

Weitere Ausführungsformen des Verfahrens und der Vorrichtung sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich schematische Darstellungen einer Ausführungsform der Erfindung.

Dabei zeigt:
- **Fig. 1**: ein Verfahrensschema,
- **Fig. 2**: eine perspektivische Ansicht einer erfindungsgemäßen Ausführungsform der Kommissionier- und Packanlage für Aufträge bestehend aus genau einem Artikel,
- **Fig. 3**: eine perspektivische Ansicht einer erfindungsgemäßen Ausführungsform der Kommissionier- und Packanlage für Aufträge mit mehr als einem Artikel,
- **Fig. 4**: eine perspektivische Ansicht eines Abschnitts einer Kommissionier- und Packanlage mit Zugabe-, Einpack- und Etikettierstation,
- **Fig. 5**: drei perspektivische Ansichten einer Ausführungsform des Kommissionierbehälters für die erfindungsgemäße Verwendung,
- **Fig. 6**: zwei perspektivische Ansichten einer erfindungsgemäßen Ausführungsform einer Übergabestation mit einem Kommissionierbehälter a) an einem Übergabeplatz und b) in geneigter Übergabesteilung,
- **Fig. 7**: vier perspektivische Detailansichten einer erfindungsgemäßen Übergabestation bei a) Anfuhr des Kommissionierbehälters an den Übergabeplatz, b) Überführen des Kommissionierbehälters in die geneigte Übergabestellung, c) Übergabe eines Artikels und d) Absenken des gefüllten Kommissionierbehälters an dem Übergabeplatz in eine Weitertransportebene,
- **Fig. 8**: vier perspektivische Ansichten einer erfindungsgemäßen Ausführungsform einer Einpackstation bei a) Anfuhr des gefüllten Kommissionierbehälters und Bereitstellung der Tüte mit Öffnung nach unten oberhalb des Einpackplatzes des Kommissionierbehälters, b) gefüllter Kommissionierbehälter auf dem Einpackplatz, c) Hochfahren des gefüllten Kommissionierbehälters in die geöffnete Tüte und d) nach Absenken des Einpackplatzes Weitertransport des eingetüteten Kommissionierbehälters,
- **Fig. 9**: eine perspektivische Ansicht einer erfindungsgemäßen Ausführungsform einer Umfüll- und Trennstation,
- **Fig. 10**: perspektivische Ansichten von Details der Umfüll- und Trennstation aus Fig. 9 bei a) Einlauf in den Halblooping, b) Transport durch den Halbfooping mit Führung des Tütenbodens zum Umfüllen und c) Entfernen des entleerten Kommissionierbehälters und Weitertransport der befüllten Tüte,
- **Fig. 11**: perspektivische Ansichten eines Kassettenträgers einer Vorrichtung zur Bereitstellung der Transportverpackung a) in Ausgangsstellung, b) in Aufnahmestellung zur Aufnahme eines Verpackungsstapels, c) mit aufgenommenen Stapel und d) in umgeklappter Stellung zur Bereitstellung der Transportverpackungen,
- **Fig. 12**: drei perspektivische Ansichten einer weiteren Ausführungsform des Kommissionierbehälters für die erfindungsgemäße Verwendung,
- **Fig. 13**: eine Seitendurchsicht des ungefüllten Kommissionierbehälters aus Fig. 12,
- **Fig. 14**: eine Seitendurchsicht des mit Artikeln gefüllten KommissionierbehäIters aus Fig. 12,
- **Fig. 15**: eine perspektivische Ansicht einer alternativen Trennvorrichtung mit einem gewendeten Kommissionierbehälter in Weitergabeposition,
- **Fig. 16**: eine Fig. 15 entsprechende Ansicht der Trennvorrichtung mit einem Kommissionierbehälter in Aufnahmeposition,
- **Fig. 17**: eine Seitenansicht der Trennvorrichtung entsprechend Fig. 15,
- **Fig. 18**: eine Seitenansicht der Trennvorrichtung entsprechend Fig. 16,
- **Fig. 19**: eine Frontansicht einer Umfüll-Trennstation mit der alternativen Trennvorrichtung,
- **Fig. 20**: eine Seitenansicht auf die Umfüll-Trennstation aus Fig. 19,
- **Fig. 21**: eine perspektivische Ansicht der Umfüll-Trennstation aus Fig. 19 mit einem Kommissionierbehälter in Weitergabeposition und
- **Fig. 22**: eine perspektivische Rückansicht der Umfüll-Trennstation aus Fig. 21,
- **Fig. 23**: eine schematische Darstellung einer schrägen Aufwärtsbewegung eines "krängenden" Kommissionierbehälters am Einpackplatz,
- **Fig. 24**: eine schematische Darstellung einer Zickzack-Aufwärtsbewegung eines "krängenden" Kommissionierbehälters am Einpackplatz.

Die Erfindung bezieht sich auf ein Verfahren zum automatischen konsolidierten Kommissionieren und Verpacken von Artikeln zum Versand, auf eine Kommissionier - und Packanlage, mit der das Verfahren ausgeführt werden kann, sowie auf eine Verwendung eines Kommissionierbehäiters in dieser Anlage zur Durchführung des Verfahrens.

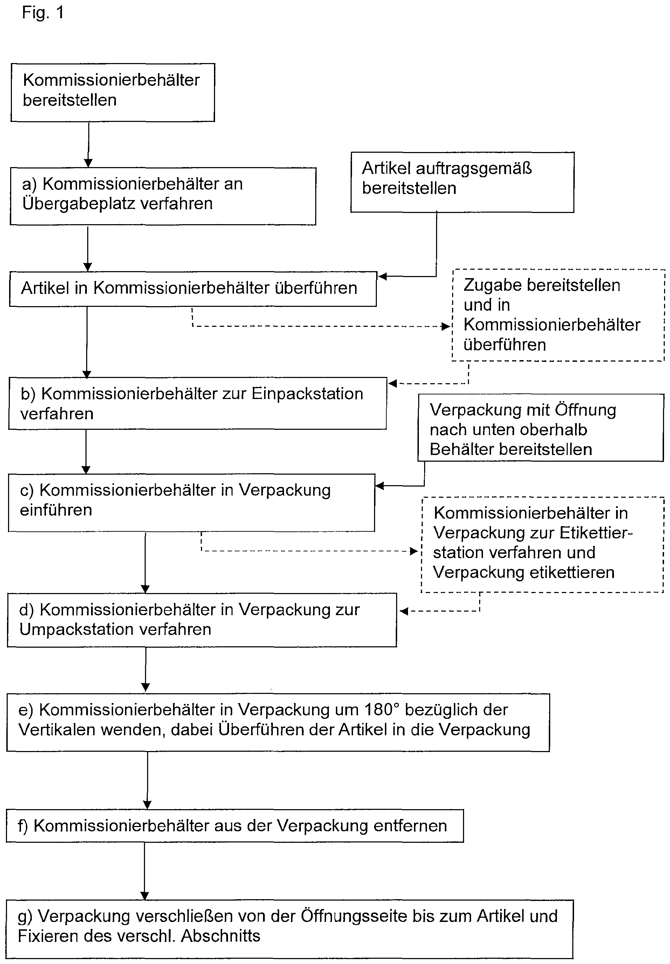

**Fig. 1** zeigt ein Fließschema des erfindungsgemäßen Verfahrens, in dem die optionalen Schritte einer besonders vorteilhaften Ausführungsform durch Strichelierungen kenntlich gemacht sind.

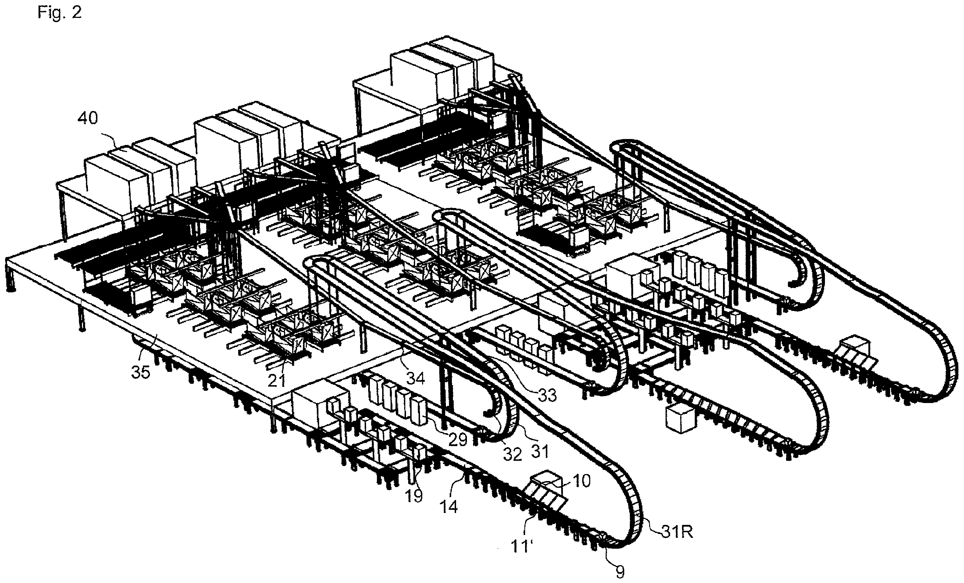

**Fig. 2** zeigt eine Gesamtanlage aus drei parallel arbeitenden erfindungsgemäßen Kommissionier- und Packanlagen für Einzelpostenaufträge, d. h. Aufträge, die nur aus einem Artikel bestehen. Der Übergabeplatz 10, an dem jeder Artikel auftragsgemäß in einen Kommissionierbehälter überführt wird, wird hier durch einen Kippabschnitt 11' zwischen den Fördereinrichtungen 9, 14 bereitgestellt, der ein "tordierendes" Fördern des Kommissionierbehäiters ermöglicht, wobei dieser von einer vertikalen Transportrichtung in eine "geneigte" Übergabelage überführt wird, um ein sanftes Eingleiten des Artikels zu ermöglichen. Per Taktbetrieb kann hier eine definierte Durchlaufzeit gegeben sein. An den Obergabeplatz 10 schließt sich eine Zugabestation 19 für Formulare und Werbemittel (als Zugaben bspw.; es können als Zugaben aber auch kleine "Geschenke" sonstiger Art für den Empfänger vorgesehen sein) an, von wo aus die Kommissionierbehälter unterhalb der Plattform 35 zu dem oder den Einpackplätzen gefördert werden. Auf der Plattform 35 befinden sich die Vorrichtungen 21 zur Bereitstellung der Transportverpackungen, um an jedem Einpackplatz oberhalb eines dort angeordneten Kommissionierbehäiters eine aufgespannte Transportverpackung mit der Öffnung nach unten weisend bereitzustellen. Zu sehen sind hierbei Kassettenträger mit unterschiedlichen Verpackungsformaten einer Magazinvorrichtung, die Teil der Vorrichtung 21 ist. Nach Durchlaufen der Halbloopingbahn 31 zum Umfüllen des Artikels in die Transportverpackung und nach erfolgter Trennung der Kommissionierbehälter mittels der Rampe 33 von den Transportverpackungen können diese über die Förderbahn 34 jeweils einer Vorrichtung 40 zum Verschließen der Transportverpackung zugeführt werden. Die entleerten Kommissionierbehälter werden über eine Rückführwendevorrichtung 31R wieder dem Übergabeplatz 10 für die Kommissionierung des nächsten Auftrags bereitgestellt.

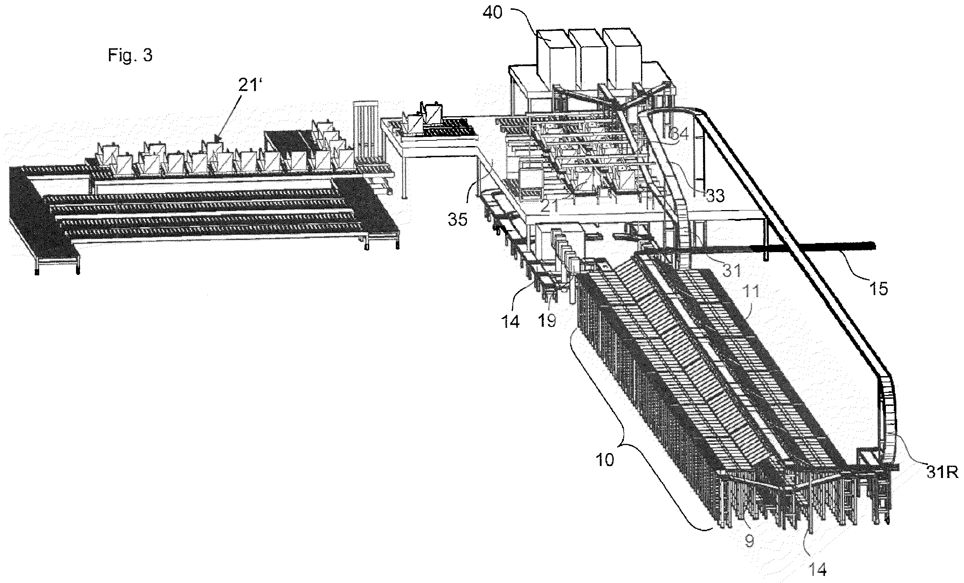

**Fig. 3** zeigt eine erfindungsgemäße Kommissionier- und Packanlage, diesmal mit einer Übergabestation mit mehreren Übergabeplätzen 10 für mehrpöstige Aufträge, wobei die Artikel eines Auftrags in den an einem übergabeplatz geneigt bereitgestellten Kommissionierbehälter überführt werden, ehe die weiteren Stationen wie bei **Fig. 2** durchlaufen werden. Zusätzlich ist in **Fig. 3** noch ein Anlagenabschnitt mit einer Vielzahl Kassettenträgern 21' dargestellt, in denen die unterschiedlichen Transportverpackungen bereitgestellt und die Kassettenträger der Magazinvorrichtung aufgefüllt werden. Zudem kann hier ein Anbruchmanagement der Transportverpackungen inklusive Chargenverfolgung der Verpackungen erfolgen, die aus Qualitätssicherungsgründen für den vollautomatischen Betrieb durchgeführt wird, da die Feststellung von Qualitätsmängeln im laufenden Prozess, z. B. Aufreißen der Verpackung beim Aufspannen, nachteilig wäre.

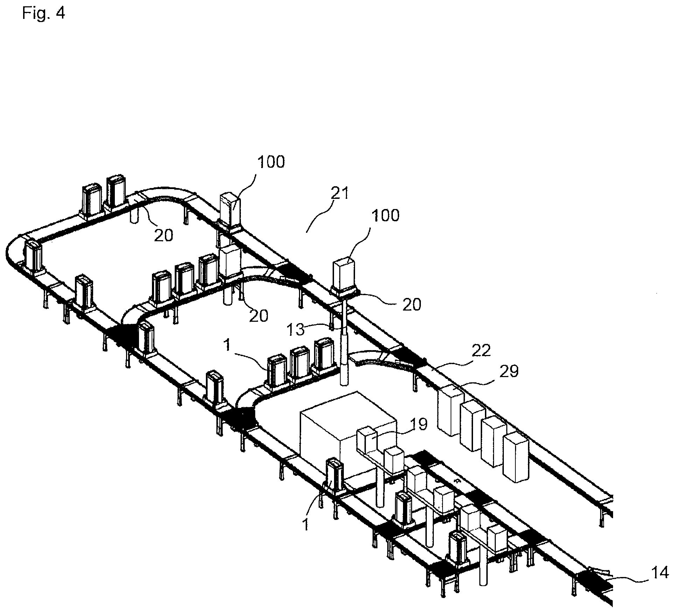

**Fig. 4** zeigt beispielhaft einen Anlagenabschnitt mit Zugabestation 19, Einpackstation mit drei parallelen Einpackplätzen 20 und Etikettierstation 29. Der Anlagenabschnitt mit den Einpackplätzen 20 ist in den Darstellungen in **Fig. 2** **und** **3** durch die Plattform 35 verdeckt, unter der diese Stationen angeordnet sind, Es versteht sich von selbst, dass eine erfindungsgemäße Kommissionier- und Packanlage im Hinblick auf die Anzahl der parallel arbeitenden Bearbeitungsstationen (Übergabestationen, Zugabestationen, Einpackstationen, Etikettierstationen, Umfüll- und Trennstationen sowie Verschließstationen) sowie die Anzahl der dort enthaltenen parallel oder seriell angeordneten Bearbeitungsplätze (Übergabeplätze, Zugabeplätze, Einpackplätze und Etikettierplätze) in keiner Weise auf die in den Figuren dargestellten Beispiele beschränkt ist. Es ist offensichtlich, dass die Anlage je nach Bedarf variabel hinsichtlich der Anlagenkomponenten gestaltet werden kann.

Die Anlagen aus **Fig. 2** und **Fig. 3** können in einer Gesamtanlage nebeneinander enthalten sein und je nach Auftragslage bei Bedarf parallel betrieben werden, wobei die Aufträge mit nur einem Artikel in den Anlagen gem. **Fig. 2** abgewickelt werden, während in der Anlage in **Fig. 3** die mehrpöstigen Aufträge abgewickelt werden. Liegt eine geringere Auftragsanzahl bzw. -dichte vor, können auch in der Anlage aus **Fig. 3** die EinzelpostenAufträge abgewickelt werden, was dann günstiger ist, als auch die Anlage gemäß **Fig. 2** in Betrieb zu halten.

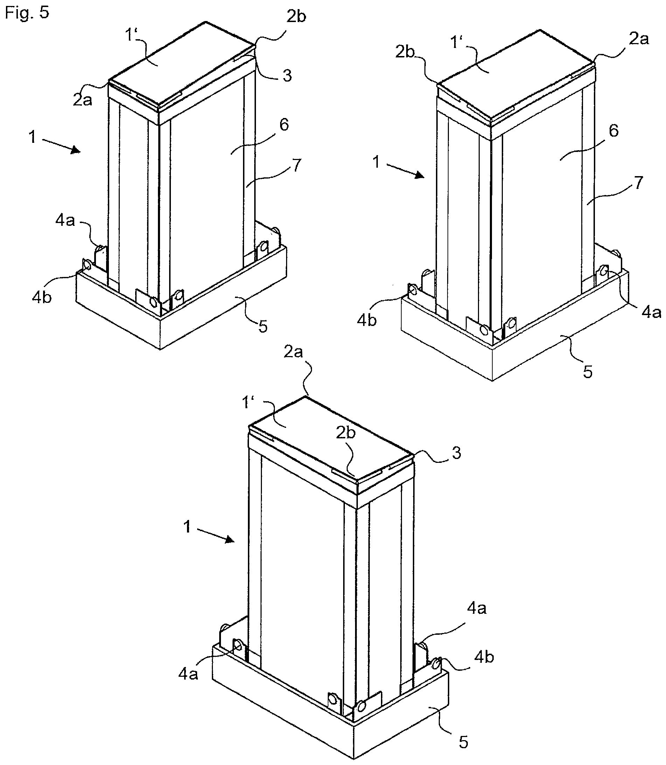

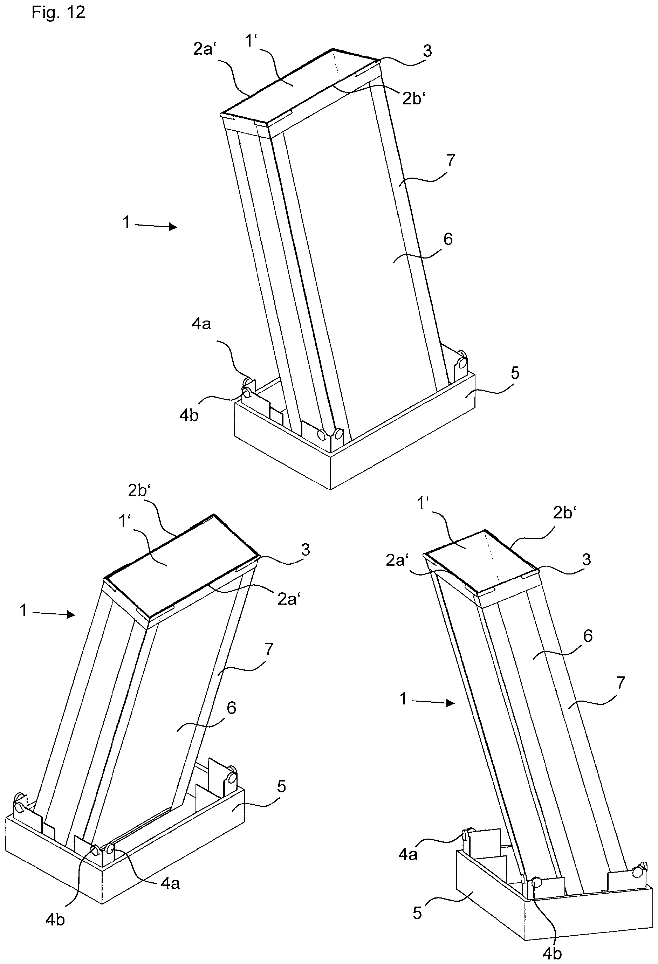

Das Verfahren, das mit einer solchen erfindungsgemäßen Kommissionier- und Packanlage ausgeführt werden kann, sieht die Bereitstellung eines geeigneten Kommissionierbehälters 1 vor, wie er beispielhaft in **Fig. 5** oder **Fig. 12** jeweils in drei Ansichten gezeigt ist. In dem Kommissionierbehälter 1 wird der oder werden die Artikel entsprechend einem Auftrag bzw. entsprechend einer Bestellung zusammengestellt, um für den Versand verpackt zu werden.

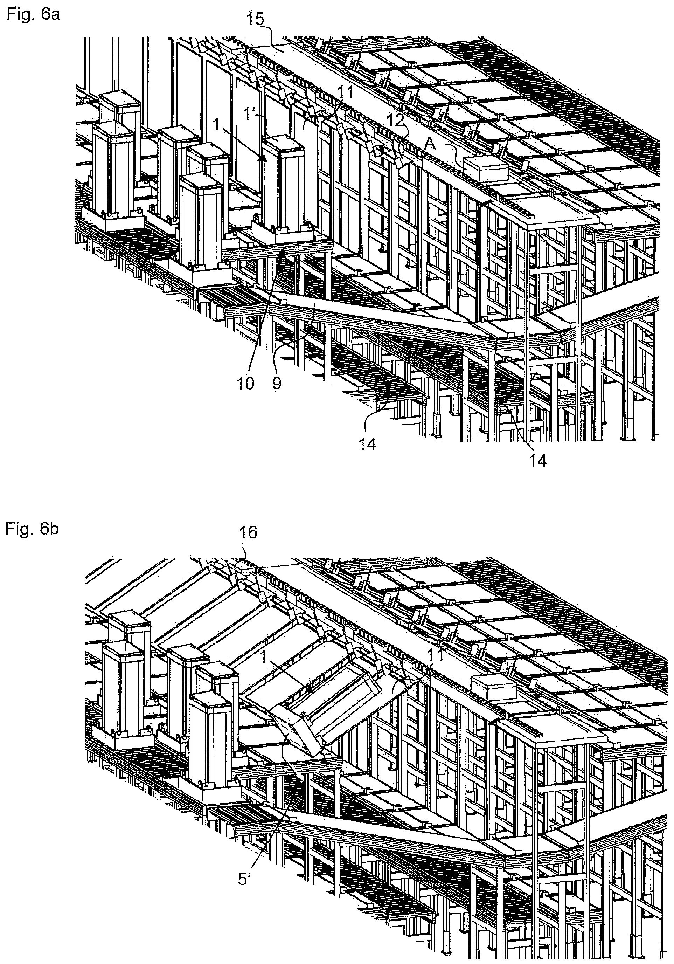

Der Kommissionierbehälter 1 in **Fig. 5****,** der in diesem Ausführungsbeispiel einen im Wesentlichen quaderförmigen Grundkörper 6 hat, weist durch rechtwinklig trapezförmige Wandflächen eine gegenüber der Bodenfläche 5' (vgl. **Fig. 6b****)** geneigte Öffnung 1' auf, sodass der Behälterrand einen niedrigsten Punkt 2a und einen höchsten Punkt 2b aufweist, der eine Führungsecke bildet, die zusammen mit den Abrundungen 3 an den Ecken das Einführen in die Transportverpackung 100 erleichtert. Zur Erhöhung der Standstabilität bzw. Verringerung der Kippgefahr des Grundkörpers 6, dessen Höhenabmessungen die Breiten- und Tiefenabmessung deutlich übersteigt, ist der Grundkörper 6 in einer Wanne 5 angeordnet, deren Auflagefläche größer als die des Grundkörpers 6 ist. Dieser ist in der Wanne 5 befestigt, vorzugsweise lösbar, beispielsweise mittels Schrauben, um bei Bedarf einzelne Komponenten austauschen zu können. Es ist aber auch denkbar, dass Wanne 5 und Grundkörper 6 einstückig ausgebildet sind. Zudem weist der Kommissionierbehälter 1 in Bodennähe seitlich Längsrollen 4a, und im dargestellten Beispiel auch Querrollen 4b auf, die zur sicheren Führung in einem stabilen horizontalen Förderprozess beitragen. Zusammen mit der Wanne 5 tragen sie besonders bei unterschiedlichen Belade-/ Füllzuständen bezogen auf den jeweiligen Schwerpunkt zur sicheren Führung bei horizontaler Förderung bei, um Kippen des Kommissionierbehälters 1 zu vermeiden. Die Rollen 4a, 4b sind im dargestellten Beispiel an einem Rahmen 7 befestigt, der auch den Grundkörper 6 begrenzt. Es sind aber auch ohne weiteres Alternativen denkbar, in denen die Rollen 4a, 4b an der Wanne 5 oder dem Grundkörper 6 selbst befestigt sind. Hingegen muss der Grundkörper 6 in der Variante mit dem Rahmen 7 nicht einstückig sein, er kann auch aus Paneelen gebildet werden, die an dem Rahmen befestigt werden.

Voneinander abgewandt liegende Rollen, also entweder Längsrollen 4a oder Querrollen 4b, vorzugsweise die Längsrollen 4a, dienen dazu, den Kommissionierbehälter 1 in seitlichen Schienen zum Wenden und Überkopfförderung zu fördern.

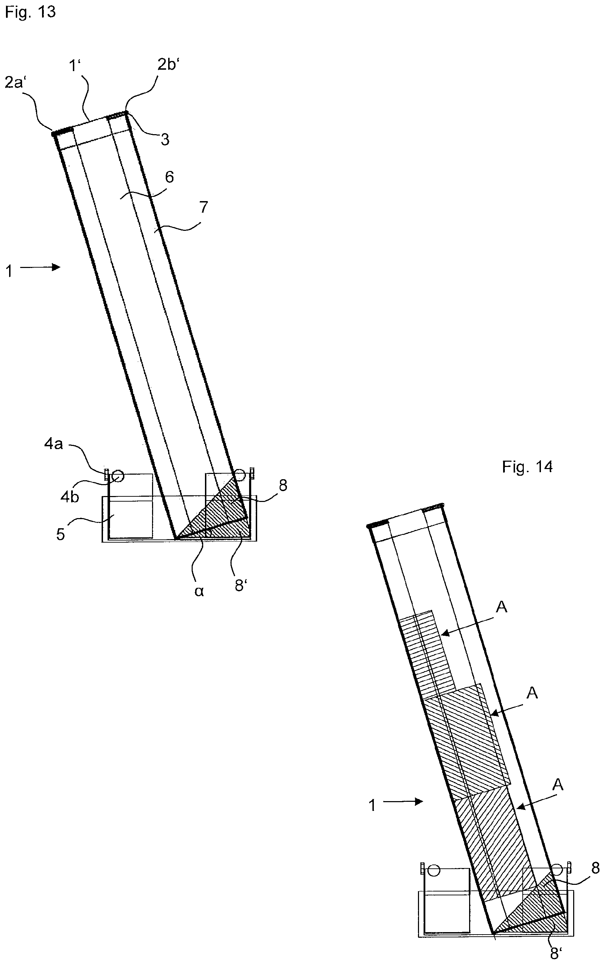

In **Fig. 12** und auch in **Fig. 13** und **14** ist eine alternative Ausführungsform eines Kommissionierbehälters 1 für die erfindungsgemäße Verwendung gezeigt, der sich von dem in **Fig. 5** in erster Linie dadurch unterscheidet, dass der Grundkörper 6 gegenüber der Stand- bzw. Bodenfläche 5', die durch die wannenförmige Stabilisierungsvorrichtung 5 definiert wird, um einen Winkel α geneigt ist. Durch diese Neigung weist der quaderförmige Grundkörper 6 eine niedrigere Kante 2a' und eine höhere Kante 2b' an dem die Öffnung 1' begrenzenden Behälterrand auf, die damit ebenfalls gegenüber der (Stand-)Bodenfläche 5' des Kommissionierbehäiters 1 geneigt ist. Zur Festlegung und Stabilisierung dieser Neigung ist, wie in **Fig. 13** und **14** zu sehen ist, ein Unterlegkeil 8' vorgesehen, mit dem der Grundkörper 6 in der Wanne 5 befestigt ist. Durch geeignete Materialwahl hinsichtlich der Masse kann mit diesem Unterlegkeil 8' auch dem Kippmoment des "krängenden" Kommissionierbehälters 1 entgegengewirkt werden. Zur Stabilisierung des Grundkörpers 6 in der Wanne 5 können auch noch weitere, hier nicht dargestellte Stützelemente vorgesehen werden.

**Fig. 13** und **14** zeigen ferner einen Keil 8, der vorzugsweise aus Schaumstoffmaterial gefertigt ist, und der in dem Grundkörper 6 an dessen Innenboden angeordnet ist, wobei die spitzwinklige Seite des Keils 8 auf der Seite des Grundkörpers 6 angeordnet ist, die die niedrigere Kante 2a' an dem die Öffnung 1' begrenzenden Behälterrand aufweist Der Schaumstoffkeil 8 unterstützt, wie in **Fig. 14** zu sehen ist, das Anliegen der Artikel A an der "unteren" Behälterwand des "krängenden" Kommissionierbehälters 1, dämpft den Aufschlag der eingefüllten Artikel A und hält zudem stabilisierend die Kante des Deckels des untersten Artikels A.

Selbstverständlich kann auch ein nicht "krängender" Kommissionierbehälter mit einem solchen Schaumstoffkeil im Grundkörper ausgestattet sein, um nach der Überführung der Artikel, wenn der Kommissionierbehälter wieder aufgerichtet wird, das ungewollte Öffnen der Waren mit losen Deckeln zu vermindern und auch während des weiteren Transports durch die Anlage ein Kippen oder Verrutschen der Artikel im Kommissionierbehälter zu reduzieren. Auch hier wird die spitzwinklige Seite des Keils auf der Seite des Grundkörpers angeordnet, die den niedrigsten Punkt an dem Behälterrand aufweist, da diese die "untere" Behälterwand ist, wenn der Kommissionierbehälter zur Überführung der Artikel zur Zuliefervorrichtung gekippt wird.

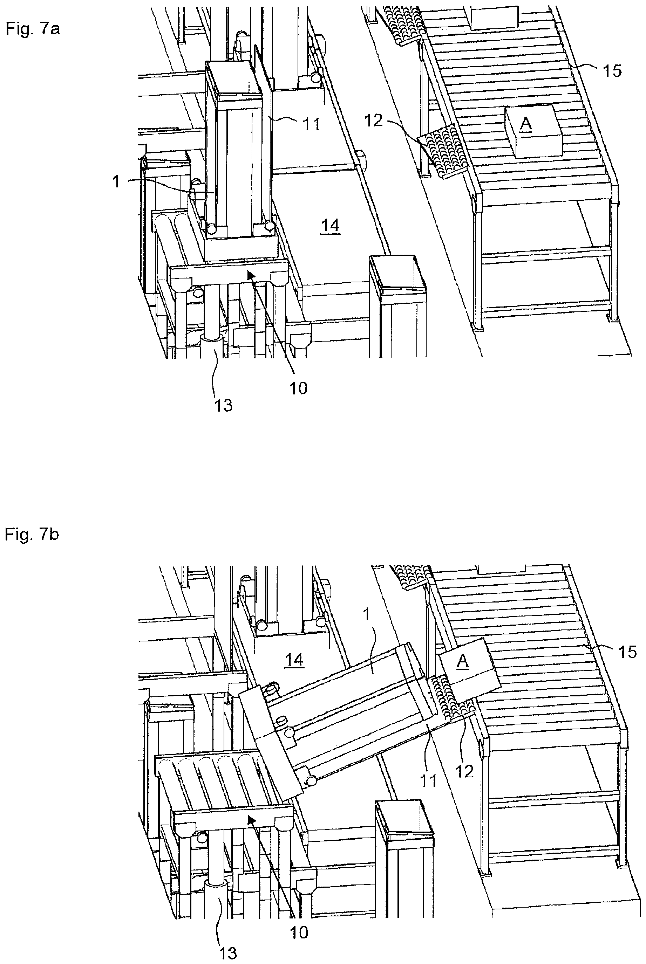

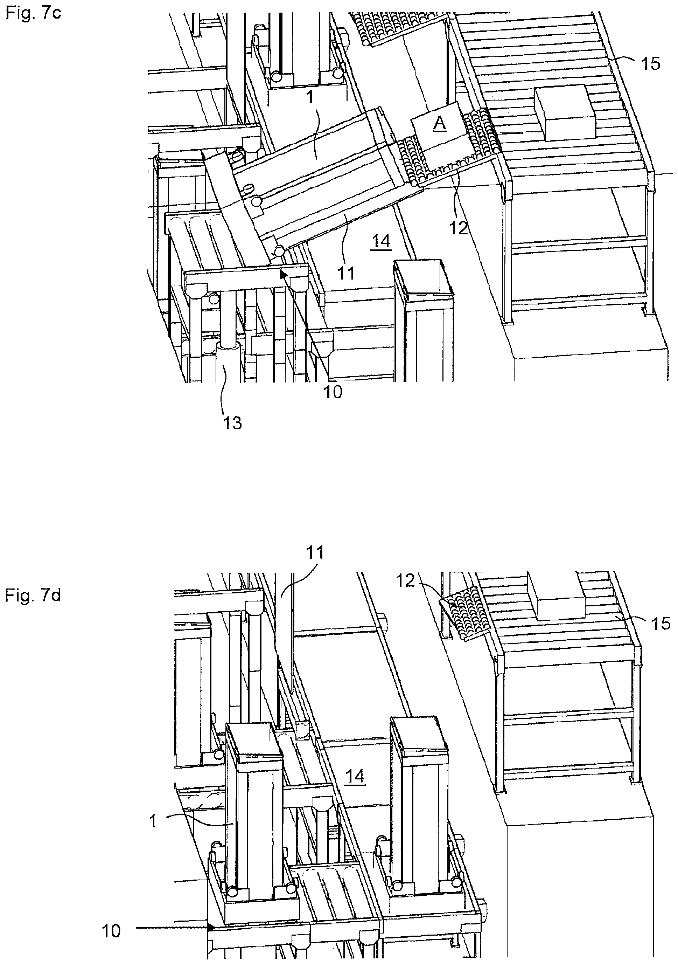

Im erfindungsgemäßen Verfahren, das in **Fig. 1** gezeigt ist, wird jeder Artikel A aus der Bestellung an einem für den Artikel A oder den jeweiligen Kommissionierbehälter 1 vorbestimmten Übergabeplatz 10 (vgl. **Fig. 2****,** **3****,** **6** **und** **7****)** von einer Zuliefervorrichtung 15 in den Kommissionierbehälter 1 überführt. Um diese Überführung sanft vonstattengehen zu lassen, wird gemäß Schritt a) der Kommissionierbehälter 1, der durch Anfördereinrichtungen 9 an den vorbestimmten Übergabeplatz 10 gefördert wurde, wie in **Fig. 6a** **und** **7a** dargestellt ist, mit seiner Öffnung 1', vorzugsweise über seine Breitseite mit dem höchsten Eckpunkt 2b, in Richtung der Artikel-Zuliefervorrichtung 15 gekippt, was in **Fig. 6b** **und** **7b** gezeigt ist, sodass der entsprechende Artikel A, wie in **Fig. 7c** gezeigt, über die Übergabevorrichtung 12 in den Kommissionierbehälter 1 rutschten kann. Anders als dargestellt, kann der Kommissionierbehälter 1 aber auch über jede andere Seite gekippt werden.

Zum Kippen der Kommissionierbehälter 1 haben die Übergabeplätze 10 der Übergabestation einer erfindungsgemäßen Kommissionier- und Packanlage jeweils eine zugeordnete Kipprampe 11, die eine Ebene des Übergabeplatzes 10 mit einer darüber liegenden Ebene der Zuliefervorrichtung 15 für die Artikel A in einem vorbestimmten Neigungswinkel verbindet. In der in **Fig. 7** gezeigten Ausführungsform ergänzt die Übergabevorrichtung 12 der Zuliefervorrichtung 15 die Kipprampe 11, die den Kommissionierbehälter 1 in dem vorbestimmten Neigungswinkel stützt und ihn nach erfolgter Artikelübergabe wieder aufrichtet.

Die in den **Figuren 2** bis **4** und **6** bis **11** dargestellten Ausführungsformen der erfindungsgemäßen Anlagen und Vorrichtungen sind für Kommissionierbehälter 1 gemäß der in **Fig. 5** gezeigten Ausführungsform konzipiert. Die für "krängende" Kommissionierbehälter 1 gemäß **Fig. 12 bis 14** entsprechend erforderlichen Modifikationen dieser Anlagen und Vorrichtungen sind jedoch offensichtlich. Eine Übergabestation für "krängende" Kommissionierbehälter 1 kann dabei obigen Ausführungen entsprechen, wobei lediglich die Kipprampe hinsichtlich ihres Kippwinkels angepasst wird, damit der Grundkörper des "krängenden" Kommissionierbehälters an dem Übergabeplatz die gewünschte Neigung zur Zuliefervorrichtung bzw. Übergabevorrichtung aufweist. Für den Fall, dass die Neigung des Grundkörpers des krängenden Kommissionierbehälters dem vorbestimmten Neigungswinkel zur Übergabe der Artikel entspricht, kann die Übergabestation auf Kipprampen verzichten.

Die Übergabevorrichtung 12 in der in **Fig. 6** gezeigten Ausführungsform weist zudem eine Sensorvorrichtung 16 auf, hier ein Lichtschrankensensor, wobei die "Lichtschranke" als Strich symbolisiert dargestellt ist. Diese Sensorvorrichtung 16 ist in erster Linie zur "Quittierung" einer erfolgten Befüllung vorgesehen, kann aber zudem als Überfüllungskontrolle eingesetzt werden. Wenn etwa mehr als ein Artikel in dem Kommissionierbehälter 1 zusammengestellt werden soll, und unter diesen Artikeln ein oder mehrere sperrige Artikel sind, kann es bei ungünstiger Lage dieser Artikel A im Kommissionierbehälter 1 zu einem Überstand des Artikels A über die Öffnung 1' des Kommissionierbehälters 1 hinaus kommen. Dieser überstehende Artikel kann dann durch die Sensorvorrichtung 16 erfasst werden, sodass durch die Steuerung bei einem erfassten Überstand eine Senkrechtstellung des Kommissionierbehälters 1 aus der geneigten Übergabeposition bewirkt wird, um durch diese Bewegung die Artikel im Kommissionierbehälter 1 neu zu ordnen und den überstehenden Artikel A vollständig in den Kommissionierbehälter 1 eingleiten zu lassen. Sind dann zur Vervollständigung des Auftrags noch weitere Artikel in den Kommissionierbehälter 1 zu übergeben, wird dieser wieder gekippt, bis die vollständige Befüllung mit allen auftragsgemäßen Artikeln erreicht ist. Sollte beim erneuten Kippen des Kommissionierbehälters 1 der Sensor 16 ohne weitere Artikelübergabe aufgrund eines anhaltenden Überstands wieder ansprechen, wird die Befüllung unterbrochen und automatisch ein Korrekturfall bzw. eine Störmeldung zur manuellen Behebung durch einen Mitarbeiter ausgegeben.

Je nach Art der Kommissionierung ist es zwar denkbar, dass ein Kommissionierbehälter 1 zu anderen Übergabeplätzen 10 zur Übernahme anderer Artikel aus dem Auftrag gefördert werden kann, erfindungsgemäß ist aber in erster Linie vorgesehen, dass er alle, auch unterschiedliche Artikel eines Auftrags an einem Übergabeplatz 10 empfängt. Der einem Auftrag zugeordnete Kommissionierbehälter 1 verbleibt so lange an einem Übergabeplatz 10, bis alle ihm bzw. dem Auftrag zugeordneten Artikel sortiert und durch die Übergabevorrichtung ausgeschleust sind. Dies ist ein weiteres Merkmal der dynamischen Nutzung eines geschlossenen Behälterförderkreislaufs, welcher als Sammelstelle bzw. "Konsolidierer" immer wieder an die entsprechenden Übergabeplätze gebracht wird, wobei jeder Kommissionierbehälter immer und überall einsetzbar ist. Zur Zuordnung sind die Kommissionierbehälter mit eindeutigen, automatisch mittels eines entsprechenden Lesegeräts erfassbaren Identifizierungsmerkmalen wie Bar- oder QR-Codes oder RFID-Transponder versehen, wobei an allen Übergabeplätzen bzw. fördertechnischen Entscheidungspositionen die entsprechenden Bar-/QR-Code- oder RFID-Lesestationen integriert sind, so dass die entsprechende Information bzgl. der Kommissionierbehälteridentität und der dynamischen Auftragsidentität an den Übergabeplätzen, den Zugabestationen für Lieferschein, Rechnung, Flyer, etc., den Einpackplätzen, und den Etikettierstationen zu Steuerungszwecken benutzt werden kann.

Nach erfolgter Zusammenstellung aller Artikel A in dem Kommissionierbehälter 1 wird dieser in der dargestellten Ausführungsform der Kommissionier- und Packanlage auf dem Übergabeplatz 10 mittels einer Hubvorrichtung 13 eine Ebene nach unten verfahren und dort über Fördereinrichtung 14 zur Einpackstation weitertransportiert, wie in **Fig. 7d****)** dargestellt ist.

Wie in **Fig. 1** als Option angegeben und in **Fig. 4** dargestellt, kann der mit dem oder den auftragsgemäßen Artikeln gefüllte Kommissionierbehälter 1 vor der Einpackstation eine Zugabestation 19 für eine vorbestimmte Zugabe, die je nach Wunsch und Bedarf aus Lieferschein, Rechnung, Flyern oder auch Probenpackungen bestehen kann, passieren, die entlang der Fördereinrichtungen 14 angeordnet ist. (Im dargestellten Beispiel sind drei parallele Zugabestationen 19 dargestellt, es können aber auch mehr oder weniger Zugabestationen vorgesehen sein.) Die Zugabe der Formulare oder Werbemittel kann automatisch gesteuert erfolgen, wobei gerade auftragsspezifische Begleitformular wie Lieferschein und Rechnung online durch eine Druckervorrichtung (nicht dargestellt) der Zugabestation 19 gedruckt und automatisch in "Revolveranordnung" in den Kommissionierbehälter 1 bei konstantem Arbeitsniveau übergeben werden können, um so einen abrissfreien Betrieb, d. h. ohne Prozessunterbrechung zu erreichen. Mit "Revolveranordnung" ist ein wechselweiser Betrieb zweier (oder mehrerer) Vorrichtungen gemeint, wobei eine Vorrichtung in einer Stellung vorliegt, die eine "produktive" Arbeitsposition darstellt, in der das Drucken der Formulare und Spenden der Formulare in den Kommissionierbehälter durch Fallenlassen erfolgt, während der Kommissionierbehälter taktgebunden steht. Bei Feststellen eines vorliegenden Papier- oder Tonerbedarfs bzw. einer technischen Störung der Vorrichtung in der "produktiven" Arbeitsposition, wird die Vorrichtung, die sich bis dahin in "passiver" Ruheposition befindet, motorisch durch Drehen oder Wenden in die "produktive" Arbeitsposition gebracht, so dass der Betrieb unterbrechungsfrei fortgesetzt werden kann, während der Mitarbeiter Zugriff auf die nun in Ruheposition befindliche Vorrichtung hat, wobei sich die Ruheposition außerhalb des Automatikbereiches befindet, der durch entsprechende Einhausung geschützt ist. So kann der Mitarbeiter die aufzufüllende oder zu reparierende Vorrichtung wieder einsatzfähig machen.

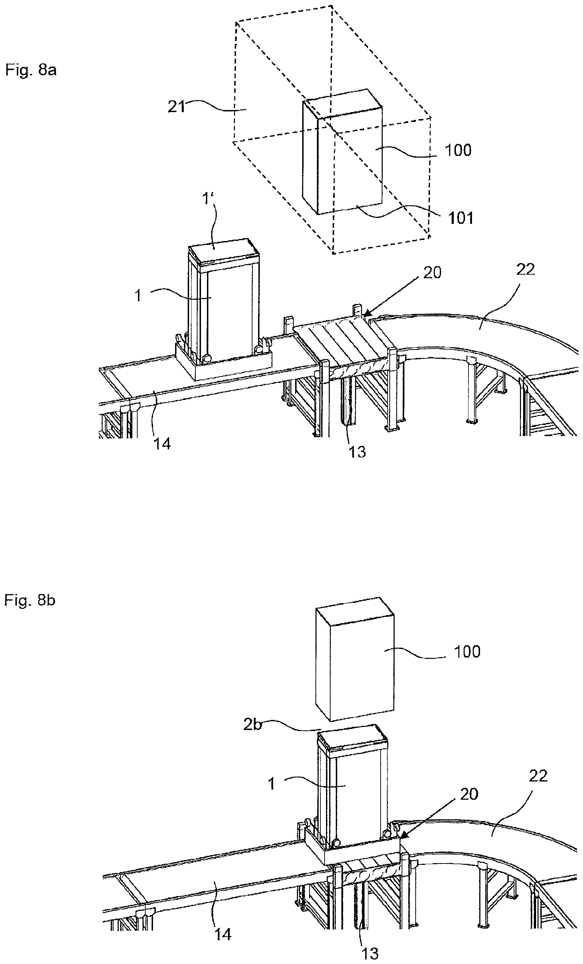

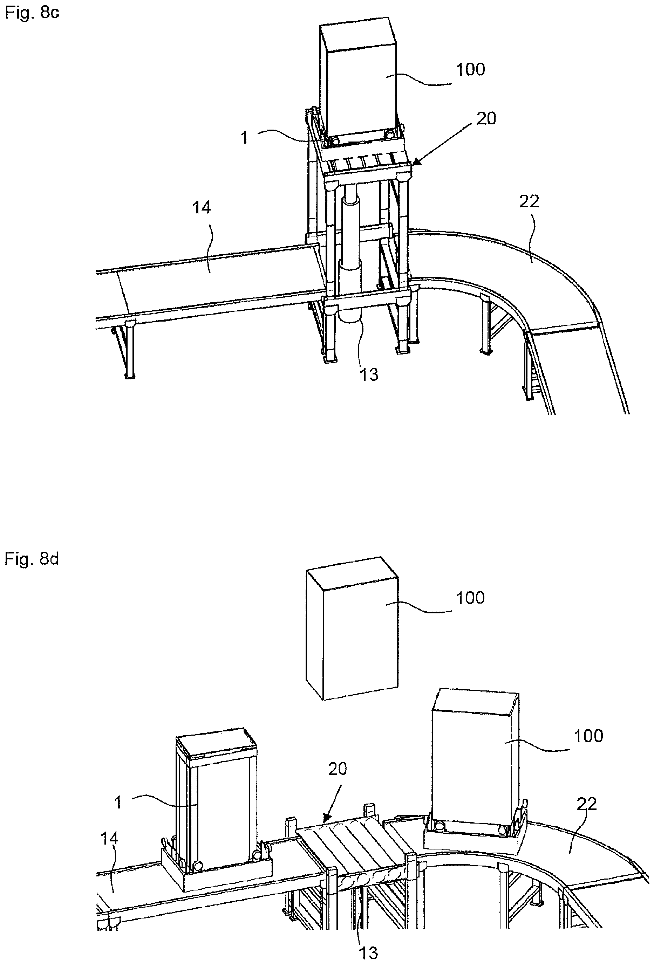

Als nächster Verfahrensschritt b) wird der mit Artikel(n) und gegebenenfalls mit der Zugabe gefüllte Kommissionierbehälter 1 an einen vorbestimmten Einpackplatz 20 verfahren, der in **Fig. 4** **-** dort sind drei parallele Einpackplätze 20 gezeigt - und **Fig. 8** in einer Bildfolge a) bis d) gemäß einer Ausführungsform dargestellt ist. Oberhalb des Einpackplatzes 20 wird von einer Vorrichtung 21 (schematisch stricheliert in **Fig. 8a** dargestellt) eine Transportverpackung 100 mit einer nach unten weisenden Öffnung 101 bereitgestellt, die zur Aufnahme des Kommissionierbehälters 1 dimensioniert ist. In **Fig. 8b****)** ist der Kommissionierbehälter 1 auf dem Einpackplatz 20 angeordnet, oberhalb dessen eine Transportverpackung 100 aufgespannt mit der Öffnung 101 nach unten weisend bereitgestellt ist.

Die Vorrichtung 21 zur Bereitstellung der Transportverpackung 100 weist eine Magazinvorrichtung mit Fächern für Transportverpackungen 100 mit unterschiedlichen Formaten und ferner eine Selektionsvorrichtung zur Auswahl und Vereinzelung jeweils einer Transportverpackung 100 eines vorbestimmten Formats und eine Aufspann- und Halterungsvorrichtung für die entfaltete Transportverpackung 100 auf. So wird die Transportverpackung 100 mit einem bestimmten Format entsprechend einer Vorgabe selektiert, die durch eine Menge/ein Volumen der Artikel des Auftrags definiert wird.

Die Magazinvorrichtung kann einen Klappmechanismus aufweisen und die unterschiedlichen Formate in einer Art Kassettenträger bereitstellen. Die Transportverpackungen eines Formats werden üblicherweise vom Lieferanten als Stapel zusammengefaltet und liegend bzw. horizontal angeordnet geliefert. Zur Bereitstellung einzelner Verpackungen aus diesem Stapel weist der Kassettenträger ein Behältnis zur Aufnahme des Stapels aus den liegenden, zusammengefalteten Transportverpackungen auf. Mit dem Klappmechanismus der Magazinvorrichtung kann der Kassettenträger geschwenkt werden, sodass die zusammengefalteten Transportverpackungen dann hochkant bzw. im Wesentlichen vertikal angeordnet vorliegen, sodass eine einzelne Transportverpackung einfacher aus dem Stapel durch eine Vereinzelungsvorrichtung entnommen werden kann. Die Vorrichtung 21 ist dazu ausgebildet, automatisch die Verpackungsformate aus der Magazinvorrichtung mit variabler Formatbereitstellung zur Abdeckung der unterschiedlichen Auftragsgrößen zu spenden. Dabei kann bevorzugt sein, dass sich die Transportverpackungen 100 nur hinsichtlich ihrer Höhe unterscheiden, das Format der Bodenfläche jedoch gleich bleibt, um nicht nur das Aufspannen der Transportverpackung 100 in der Vorrichtung 21 zu vereinfachen - so können Kommissionierbehälter 1 mit einheitlicher Größer verwendet werden. Lediglich die Transportverpackung 100 wird in Bezug auf ihre Höhe hinsichtlich der Auftragsgröße ausgewählt, wobei die Querschnittsformen/Grundflächen von Kommissionierbehälter 1 und Transportverpackung 100 korrespondierend ausgebildet sind.

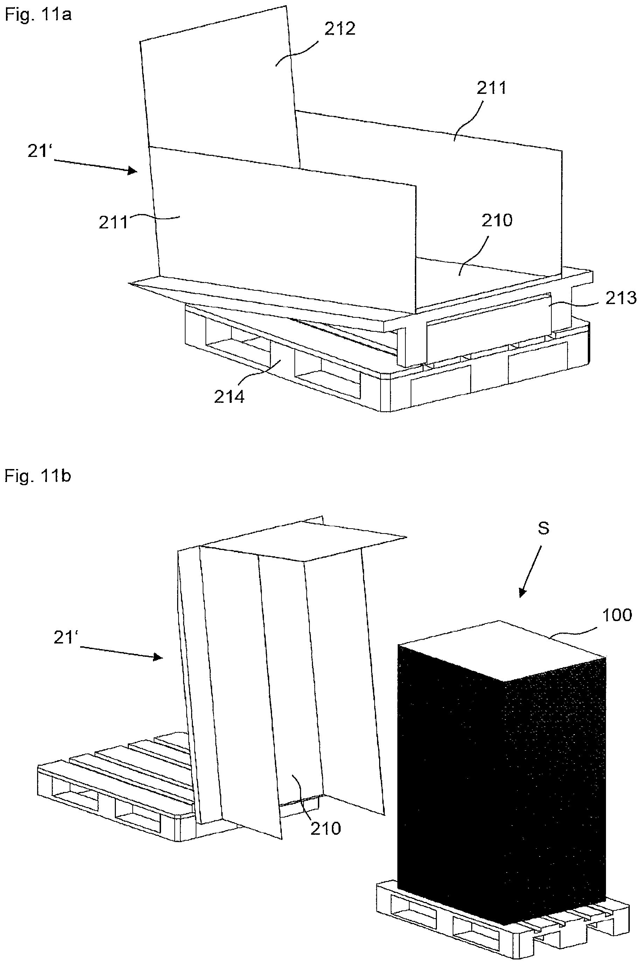

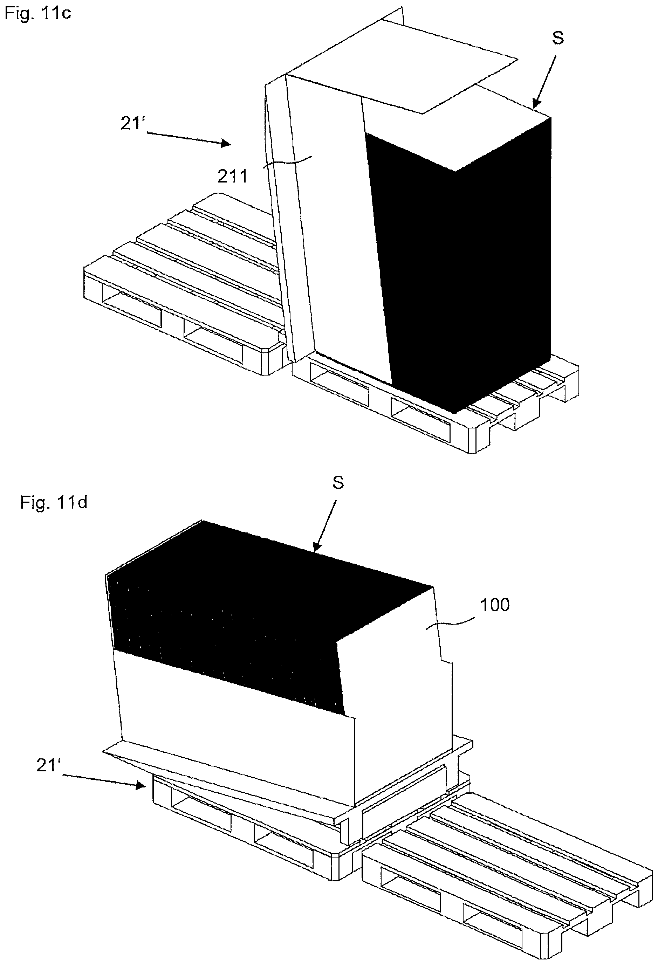

**Fig. 11** zeigt in a) einen klappbaren Kassettenträger 21', der zur Aufnahme eines Stapels S aus zusammengefalteten, aufeinander liegenden Transportverpackungen 100 (die als Stapel S auf einer herkömmlichen Palette angeliefert werden, siehe **Fig. 11b**) mit einem aus einem geneigten Boden 210 und zwei Seitenwänden 211 und einer Rückwand 212 begrenzten Behälter ausgebildet ist. An der offenen Seite, der höchsten Stelle des geneigten Bodens 210, weist der Kassettenträger 21' eine gelenkige Verbindung 213 auf, über die der geneigte Boden 210 mit einer Palettenbasis 214 verbunden ist Zur Aufnahme eines Stapels S wird der Behälter verschwenkt, so dass der geneigte Boden 210, wie in **Fig. 11b**) zu sehen ist, hochkant angeordnet ist. Der Stapel S wird, wie in **Fig. 11c**) gezeigt, zwischen den Seitenwänden 211 aufgenommen, woraufhin der Behälter zurückgeschwenkt wird, sodass die Transportverpackungen 100 des Stapels S, wie in **Fig. 11d**) zu sehen ist, hochkant im Behälter aufgenommen sind. Dabei können sich die beinahe vertikal angeordneten Transportverpackungen 100 infolge der Neigung des geneigten Bodens 210 an der Rückwand 212 abstützen, sodass der Stapel S auch in dieser Ausrichtung stabilisiert wird, um eine automatisierte maschinelle Entnahme der vordersten Transportverpackung 100 durch eine Vereinzelungs- bzw. Greifervorrichtung zu gestatten. Der klappbare Kassettenträger 21' kann mit der Palettenbasis 214 verfahren werden und ist mit geeigneter Sensorik ausgestattet, die mit der Steuerungsvorrichtung der Anlage verbunden ist, sodass diese Füllstand und Position des jeweiligen Kassettenträgers feststellen und steuern kann. Die Steuerungsvorrichtung kann damit, wenn ein Kassettenträger entleert ist, die zu verpackenden Kommissionierbehälter an einen anderen Einpackplatz transportieren, während der Kassettenträger mit einem neuen Stapel Verpackungen bestückt wird. Alternativ kann ein anderer, mit Verpackungen bestückter Kassettenträger rechtzeitig bereitgestellt werden, um zügig gegen einen entleerten Kassettenträger ausgetauscht zu werden, sodass der Einpackplatz nicht stillgelegt werden muss. Die Steuerungsvorrichtung kann ferner, wenn Leerstand eines Kassettenträgers für Transportverpackungen eines bestimmten Formats festgestellt wird, dafür sorgen, dass für die Dauer der Neubestückung mit dem bestimmten Format an diesem Einpackplatz nur Aufträge eingepackt werden, für die ein anderes, an diesem Einpackplatz noch vorrätiges Verpackungsformat vorgesehen ist.

Der Kommissionierbehälter 1, der quasi eine "Negativform" darstellt, die in die aufgespannte Transportverpackung 100 einfährt, die die "Positivform" darstellt, sorgt für ein sicheres, konstantes Arbeitsniveau. Die Höhe des Kommissionierbehälters 1 kann in Bezug zur Grundfläche so groß gewählt werden, dass eine große Vielfalt verschiedener Artikel bei der Zusammenstellung einer Bestellung aufgenommen werden kann. Die Variabilität der Transportverpackung 100 bezieht sich auf ihr (Höhen-)Format, das für die zusammengestellten Artikel jedes Auftrags passend ausgewählt wird.

Es ist zwar möglich, dass unterschiedlich dimensionierte Kommissionierbehälter 1 bereitgestellt werden können, die in Abhängigkeit einer Auftragsgröße automatisiert ausgewählt und eingesetzt werden können, wobei die Vorrichtung zur Bereitstellung der Transportverpackung 100 automatisch angesteuert werden kann, ein entsprechend passendes Verpackungsformat bereitzustellen, allerdings ist die Verwendung eines einheitlichen Kotnmissionierbehälters 1 bevorzugt, da hierdurch konstante Arbeitshöhenbedingungen gewahrt werden und somit eine sehr hohe Prozesssicherheit beim automatischen Zulegen der Formulare etc., bei einer zusätzlich optionalen Überwachung von Überständen und beim Einführen in die Transportverpackung in der Einpackstation erreicht wird.

Eine figurativ nicht dargestellte Ausführungsform der Kommissionier- und Packanlage kann somit auch eine optionale Überwachungsvorrichtung zur Überwachung von Überständen aufweisen, die entlang der Fördereinrichtungen 14 zwischen der Zugabestation 19 und der Einpackstation 20 angeordnet sein kann. Im Zusammenwirken mit der Überwachungsvorrichtung kann eine Aussortiervorrichtung entlang den Fördereinrichtungen 14 vorgesehen sein, die bei Feststellen eines Überstands an einem Kommissionierbehälter 1 diesen auf eine Bypassförderstrecke bewegt, die eine Fehlerbehebung ermöglicht. Dies kann beispielsweise durch eine sanfte Rüttelvorrichtung automatisch erfolgen, sodass die Artikel/die Zugabe im Kommissionierbehälter 1 besser platziert werden und nicht mehr überstehen. Gegebenenfalls kann jedoch auch ein Eingriff eines Mitarbeiters erforderlich sein, ehe der Kommissionierbehälter 1 wieder den Fördereinrichtungen 14 zugeführt wird, die zur Einpackstation 20 führen.

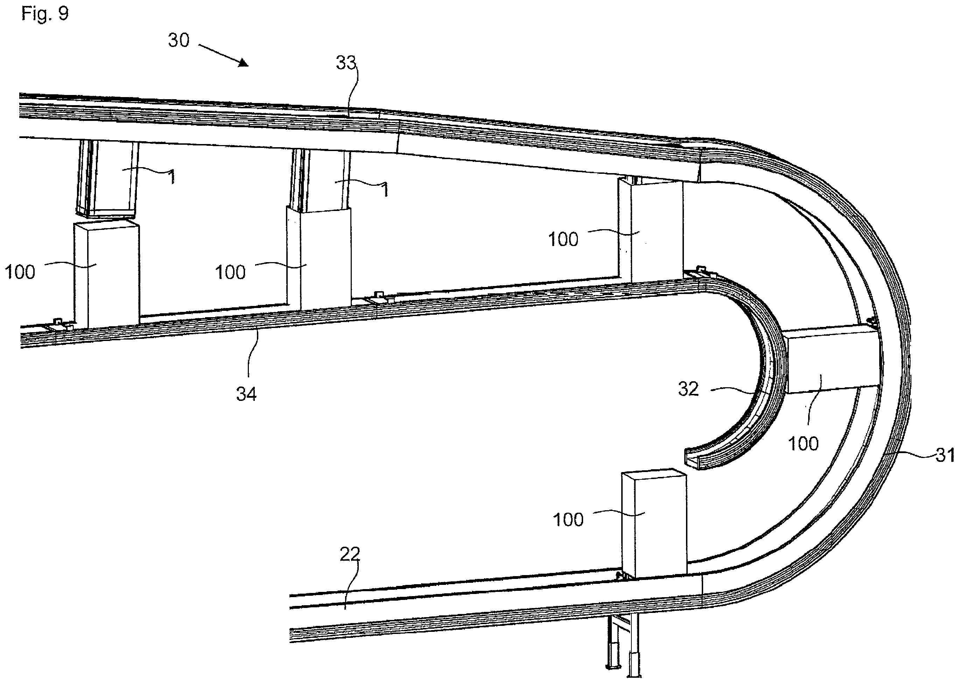

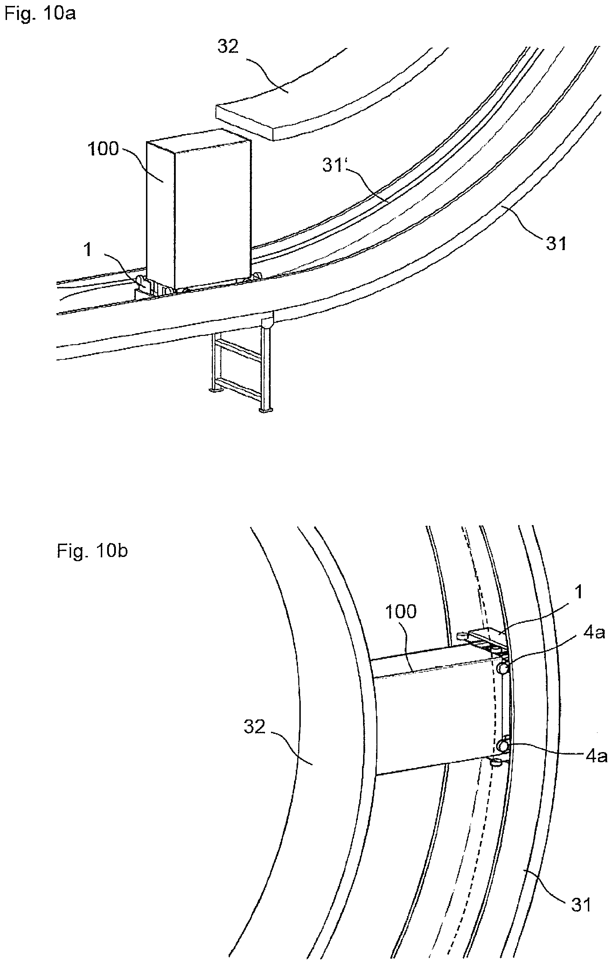

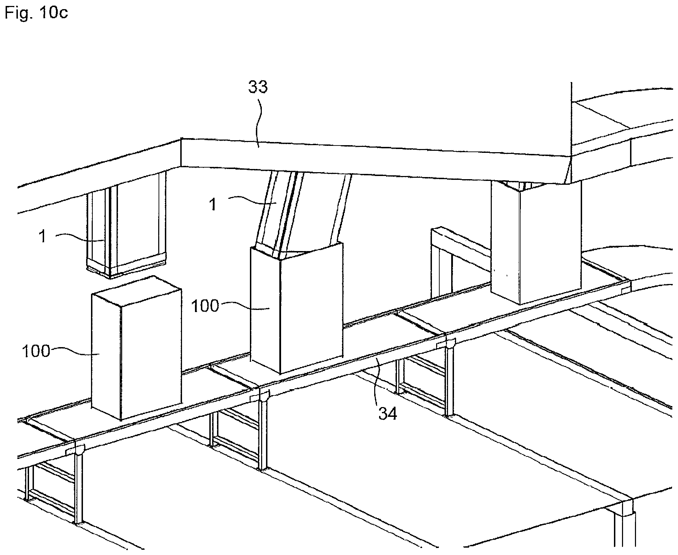

In Schritt c), der in **Fig. 8c**) und dem vordersten Einpackplatz 20 in **Fig. 4** gezeigt ist, wird der Kommissionierbehälter 1 durch die Öffnung 101 in die Transportverpackung 100 eingeführt, indem der Einpackplatz 20 durch eine Hubvorrichtung 13 aufwärts verfahren wird. Das Einführen wird durch die Führungsecke 2b und die Abrundungen 3 am Rand des Kommissionierbehälters 1 erleichtert. **Fig. 8d****)** zeigt den Weitertransport des Kommissionierbehälters 1 mit übergezogener Transportverpackung 100 über Fördereinrichtungen 22, die zur Umfüll- und Trennstation 30 führen **(****Fig. 9** **und** **10****),** während der nächste Kommissionierbehälter 1 zum Einpackplatz 20 verfahren und eine weitere Transportverpackung 100 bereitgestellt wird.

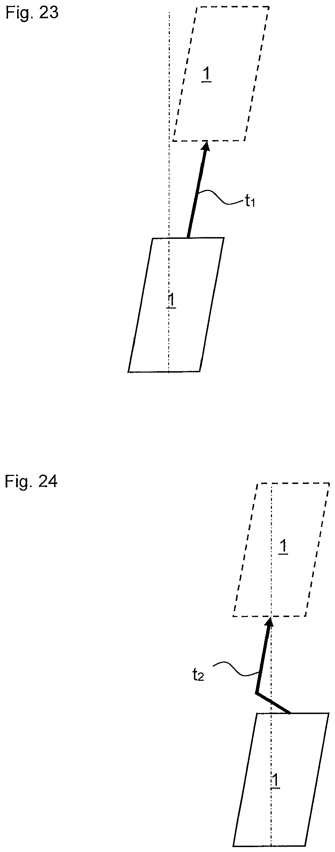

Eine figurativ nicht dargestellte Einpackstation für eine erfindungsgemäße Anlage, die "krängende" Kommissionierbehälter nutzt, ist entsprechend den durch die Neigung des Grundkörpers vorgegebenen Anforderungen modifiziert. Abweichend von der in **Fig. 4** und **Fig. 8** gezeigten Ausführungsform, die "normale" Kommissionierbehälter verwendet, können bei einer Einpackstation für "krängende" Kommissionierbehälter 1 oberhalb jedes Einpackplatzes die Vorrichtungen zur Bereitstellung der Transportverpackung mit einer nach unten weisenden Öffnung horizontal versetzt angeordnet sein, wie dies in **Fig. 23** schematisch dargestellt ist, und die jeweilige Hubvorrichtung kann zur Ausführung einer entsprechend schrägen Aufwärtsbewegung t₁ ausgebildet sein, die an die Neigung des Grundkörpers angepasst ist. Die Transportverpackung wird dann von der Bereitstellungsvorrichtung in entsprechender Weise geneigt bereitgestellt, sodass der Grundkörper des Kommissionierbehälters stoß- und knitterfrei in die Transportverpackung gleiten kann. Alternativ hierzu kann die Transportverpackung zwar geneigt, aber senkrecht direkt oberhalb des Einpackplatzes bereitgestellt werden, wie dies schematisch in **Fig. 24** angedeutet ist, wenn die Aufwärtsbewegung des Einpackplatzes beispielsweise einem abgestimmten Zick-Zack-Kurs t₂ folgt, um den geneigten Grundkörper in die Transportverpackung einzuführen. Allerdings kann die erste Variante bevorzugt sein, da eine geradlinige schräge Bewegung deutlich einfacher bereitzustellen ist, eine Hubvorrichtung für einen Zick-Zack-Kurs hingegen komplizierter und aufwändiger ausgebildet ist.

Für "krängende" wie auch für "normale" Kommissionierbehälter kann die Hubvorrichtung 13 beispielsweise durch einen Hubzylinder bereitgestellt werden, wie dies in **Fig. 8a****-d** zu sehen ist. Zur Ausführung einer schrägen Aufwärtsbewegung t₁ im Falle "krängender" Kommissionierbehälter kann der Hubzylinder entsprechend der Neigung des Kommissionierbehälters schräg anordnet werden.

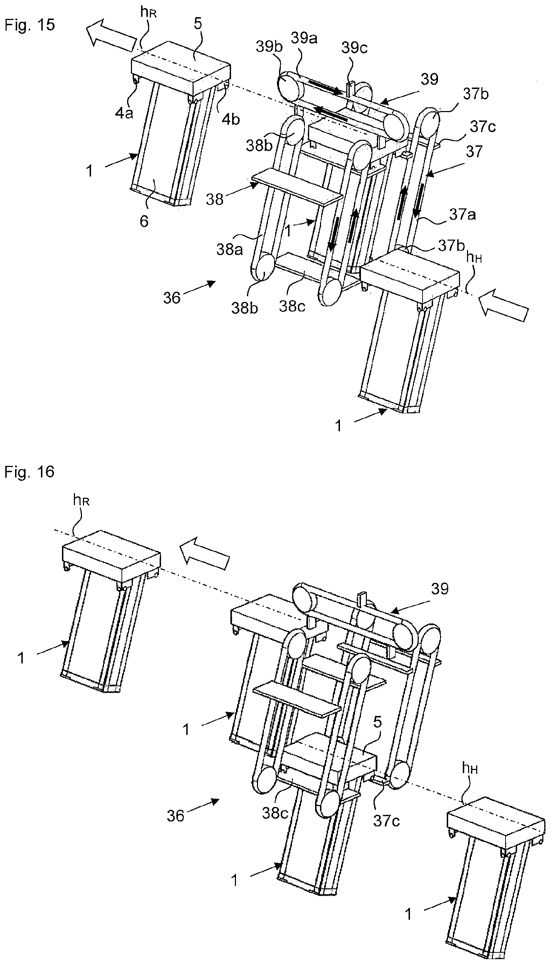

Es sind aber auch alternative Hubvorrichtungen denkbar, worunter nach vorliegendem Verständnis alle Vorrichtungen fallen sollen, mit denen ein Kommissionierbehälter am Einpackplatz aus der Ebene der Fördereinrichtungen 22 in die oberhalb dieser Ebene bereitgestellte Transportverpackung 100 gehoben werden kann. Erfindungsgemäße Hubvorrichtungen umfassen daher auch beispielsweise, aber nicht ausschließlich Hubscheren, Aufzugs- oder Liftvorrichtungen. Eine beispielhafte Liftvorrichtung zum Anheben eines "krängenden" Kommissionierbehälters wird im Zusammenhang mit einer alternativen Trennstation anhand der **Figuren 15 -18** beschrieben, dort allerdings mit einem gewendeten Kommissionierbehälter. Die dort gezeigte Liftvorrichtung aus zwei Umlaufförderern, die ähnlich wie Paternosteraufzüge konzipiert sind, ist aber ohne weiteres zur Anwendung als Hubvorrichtung für einen Kommissionierbehälter an einem Einpackplatz übertragbar.

Während gemäß Verfahrensschritt d) der in der Transportverpackung 100 angeordnete, gefüllte Kommissionierbehälter 1 über die Fördereinrichtungen 22 zur Umfüll- und Trennstation 30 gefördert wird, kann der in der Transportverpackung 100 angeordnete, gefüllte Kommissionierbehälter 1 eine Etikettierstation 29 (vgl. **Fig. 2** und **Fig. 4****)** passieren, die in den gezeigten Beispielen vier Etikettiervorrichtungen aufweist - deren Anzahl aber durchaus abweichen kann - sodass die Transportverpackung 100 mit einer Versandetikette versehen werden kann, die automatisch aufgeklebt werden kann. In der Etikettiervorrichtung werden die auftragsgemäßen Versanddaten meist von einem Thermodrucker auf die von einer Etikettenrolle bereitgestellten Etiketten aus thermisch empfindlichen Papier online aufgedruckt, von der Rolle abgezogen und auf die Verpackung aufgebracht. Die Anzahl der eingesetzten Etikettiervorrichtungen hängt vom konzeptionierten Durchsatz der Anlage ab. Im dargestellten Beispiel sind zwei Etikettiervorrichtungen erforderlich - die Anzahl von vier Vorrichtungen ist hierbei, wie auch bei der Zugabestation, durch die Vorgabe des abrissfreien automatisierten Betriebs bedingt. D. h., dass zwei Etikettiervorrichtungen sich in Arbeitsstellung und zwei in Ruhestellung befinden, die dann automatisch zum Einsatz kommen, wenn die aktiven Vorrichtungen Nachschub an Etikettenrollen benötigen oder andere Störungen haben, was dann durch Mitarbeitereinsatz behoben wird.

Das Etikett wird dabei an einer Stelle an der Transportverpackung 100 angebracht, die auch nach dem später nachfolgenden Verschließen der Transportverpackung 100 noch gut sichtbar ist. Vorzugsweise kann daher das Etikett in Bodennähe der Transportverpackung 100 angebracht werden, was in der übergestülpten Anordnung auf dem Kommissionierbehälter 1 einem oberen Abschnitt des Kommissionierbehälters 1 entspricht. Die Etikettierung der noch über dem Kommissionierbehälter 1 aufgezogenen und durch diesen stabilisierten Transportverpackung 100 findet somit unter konstanten und damit sehr prozesssicheren Bedingungen auf einem Arbeitsniveau in einer konstanten Arbeitsebene statt, bevor in Verfahrensschritt e) das Umfüllen des oder der Artikel A aus dem Kommissionierbehälter 1 in die Transportverpackung 100 mittels einer Wendebewegung, vorzugsweise um 180" in Bezug auf die Vertikale erfolgt, um die Transportverpackung 100 zu stabilisieren, bis sie aufrecht mit der Öffnung nach oben weisend angeordnet ist.

Die Umfüll- und Trennstation 30 weist zum Umfüllen eine Wendevorrichtung auf, die im vorliegenden Beispiel in **Fig. 9** **und** **10** aus einer Halbloopingbahn 31 für die Kommissionierbehälter 1 und einer entsprechenden Stabilisierungsbahn 32 für den Boden der Transportverpackung 100 zur Durchführung einer 180°-Wende in Bezug auf die Vertikale besieht. Nachfolgend ist zur Trennung des nun entleerten Kommissionierbehälters 1 von der Transportverpackung 100 gemäß Verfahrensschritt f) eine Trennvorrichtung vorgesehen, die den Kommissionierbehälter 1 aus der Transportverpackung 100 hebt, was gemäß einer Ausführungsform durch Führen und Fördern des KommissionierbehäIters 1 und der Transportverpackung 100 entlang in Bezug auf die Vertikale divergierenden Bahnen 33, 34 erfolgt. Im gezeigten Beispiel in **Fig. 9** **und** **10c** wird hierbei der Kommissionierbehälter 1 entlang einer ansteigenden Rampe 33 geführt, während die Transportverpackung 100, die nun die Artikel enthält, horizontal entlang der Förderbahn 34 weitergefördert wird. Der Kommissionierbehälter 1 und die Transportverpackung 100 werden so durch das synchrone Fördern entlang der Rampe 33 bzw. der Förderbahn 34 dynamisch entkoppelt, d. h. getrennt. Für einen "krängenden" Kommissionierbehälter werden eine Wendevorrichtung und eine Trennvorrichtung entsprechend angepasst: Die Halbloopingbahn und die Stabilisierungsbahn werden entsprechend dem Ausmaß der Neigung des Kommissionierbehälters gegeneinander versetzt sein, um während der Wendebewegung, wenn der Kommissionierbehälter der Halbloopingbahn folgt, den Boden der Transportverpackung mit der Stabilisierungsbahn zu stützen. Die anschließende Trennvorrichtung wird so modifiziert, dass der Kommissionierbehälter eine Bewegung entlang der Neigungsrichtung seines Grundkörpers durchführt, sodass der Kommissionierbehälter, ohne hängen zu bleiben, geradlinig aus der Transportverpackung gezogen wird. Zu diesem Zweck kann die ansteigende Rampe der Trennvorrichtung auch in horizontaler Richtung divergierend zu der Förderbahn der Transportverpackung verlaufend angeordnet werden.

Damit der Kommissionierbehälter 1 durch die Halbloopingbahn 31 und entlang der Rampe 33 bewegt werden kann, sind dort entsprechende Führungsmittel vorgesehen. Im dargestellten Beispiel handelt es sich dabei um seitliche Führungsschienen 31', die hier zum Eingriff mit den Längsrollen 4a des Kommissionierbehälters 1 zur Förderung desselben durch den Halblooping ausgebildet sind, da der Kommissionierbehälter 1 zur Verringerung der Kippneigung in Längsrichtung gefördert wird. Am Eingang des Halbloopings ist in **Fig. 10a** ein sich verjüngender Einlaufbereich der Schiene 31' für die Rollen 4a zu sehen. In **Fig. 10b** ist die seitliche Führung zur Darstellung der Längsrollen teilweise weggelassen und die restliche Wandung durch Strichelierung angedeutet.

Alternativ zur Längsführung kann aber selbstverständlich auch eine solche Halbloopingbahn 21 und die Rampe 33 für einen quer geförderten Kommissionierbehälter 1 ausgelegt sein, wobei dann die Querrollen 4b in die Führungsschienen eingreifen.

Nicht dargestellt sind weitere denkbare Wendevorrichtungen zum Umfüllen der Artikel aus dem Kommissionierbehälter 1 in die Transportverpackung 100. Denkbar wäre beispielsweise auch eine schraubenförmige Wendel, sodass der der Kommissionierbehälter 1 während der Wendebewegung um zwei Achsen gedreht wird.

Eine nicht dargestellte Weiterbildung des Kommissionierbehälters 1 kann ferner vorsehen, dass dieser eine integrierte Pendelaufhängung aufweist, um eine verkantungsfreie Aufwärtsförderbewegung in der Rampe 33 beim Ausführen aus der Transportverpackung 100 zu vermeiden, indem der Grundkörper 6 des Kommissionierbehälters 1 bei der Aufwärtsfahrt frei pendelnd in der Waagerechten gehalten werden kann.

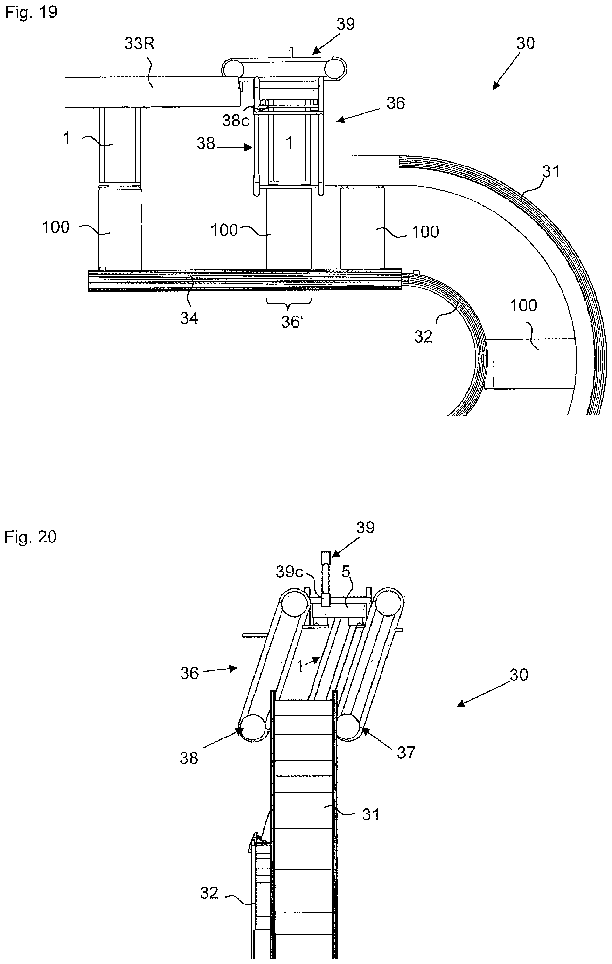

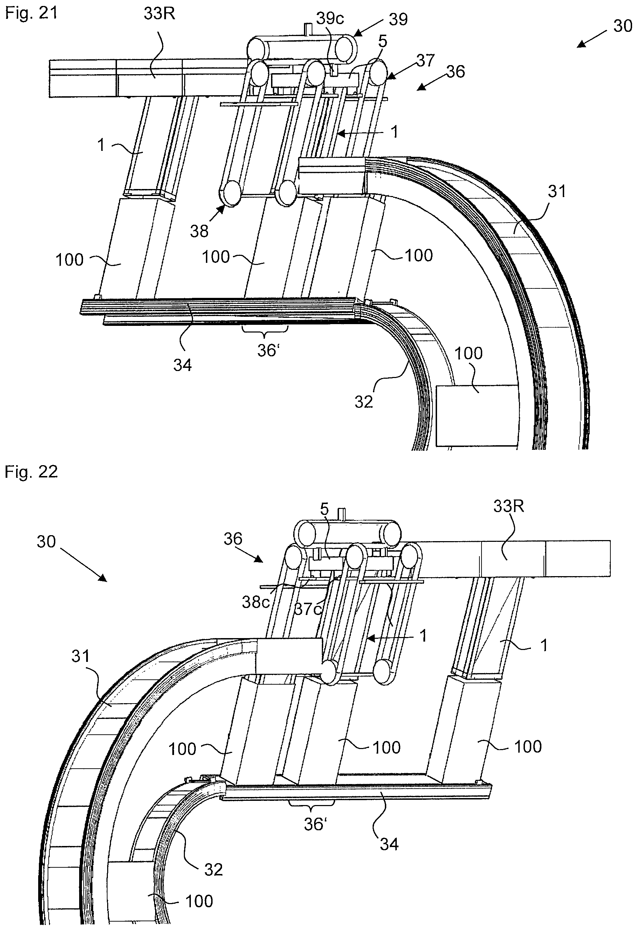

Alternativ zu den divergierenden Bahnen zur Trennung des Kommissionierbehälters 1 und der Transportverpackung 100 kann eine Umfüll- und Trennstation 30 einer alternativen Ausführungsform, wie in **Figuren 19 bis 21** dargestellt, eine platzsparende Trennvorrichtung in Form einer Liftvorrichtung 36 im Anschluss an die Wendevorrichtung aufweisen, die auch in. diesem Beispiel aus einer Halbloopingbahn 31 für die Kommissionierbehälter 1 und einer entsprechenden Stabilisierungsbahn 32 für den Boden der Transportverpackung 100 zur Durchführung einer 180°-Wende in Bezug auf die Vertikale besteht. Wie in **Fig. 20** zu sehen ist, sind in diesem Ausführungsbeispiel, das sich aufdrängende" Kommissionierbehälter 1 bezieht, die Halbloopingbahn 31 und die Stabilisierungsbahn 32 entsprechend der Neigung der "krängenden" Kommissionierbehälter 1 in horizontaler Richtung gegeneinander versetzt.

Nach Passieren der Wendevorrichtung, d. h. nach dem Verlassen der Halbloopingbahn 31, wird der gewendete Kommissionierbehälter 1, wie nachfolgend noch ausführlicher und in Zusammenhang mit **Figuren 15 bis 18** beschrieben wird, von der als Liftvorrichtung 36 ausgebildeten Trennvorrichtung erfasst und entsprechend der Neigung des "krängenden" Kommissionierbehälters 1 schräg nach oben geführt und damit von der gefüllten Transportverpackung 100 getrennt, die während der Trennphase auf einem Halteplatz 36' entlang der Abförderbahn 34 unterhalb der Liftvorrichtung 36 hält und erst nach der erfolgten Trennung weiter in Richtung Verschlussstation abgefördert wird.

Zur Rückführung der gewendeten Kommissionierbehälter 1 schließt sich am oberen Ende der Liftvorrichtung eine Rückführbahn 33R an, in die der gewendete Kommissionierbehälter 1 mittels einer Horizontalfördereinrichtung 39 überführt wird. Über die Rückführbahn 33R können die gewendeten (und daher leeren) Kommissionierbehälter 1 einer Rückführwendevorrichtung zugeführt werden, sodass sie dann wieder mit der Öffnung nach oben nach Zuordnung zu einem neuen Auftrag der Übergabestation mit den Übergabeplätzen zugeführt werden können. Die Höhendifferenz, die mit der Liftvorrichtung 36 zu überbrücken ist, ergibt sich aus den Höhen der Transportverpackung 100 und des Kommissionierbehälters 1, wodurch sich die Positionierung der Rückführbahn 33R und der Horizontalfördereinrichtung 39 ergibt.

Die Horizontalfördereinrichtung 39, die ebenfalls in Fig. 15 bis 18 zu sehen ist, ist im gezeigten Beispiel ein horizontal angeordneter Umlaufförderer 19, bestehend aus einer umlaufenden Kette bzw. einem Riemen oder Gurt 39a, der um zwei Umlenkrollen 39b geführt angetrieben wird. In Fig. 15 zeigen die schwarzen Pfeile die Umlaufrichtung des Gurts 39a, an dem in gleichmäßigem Abstand drei Mitnehmer- bzw. Eingriffselemente 39c angeordnet sind. Je nach Gegebenheiten und Anforderungen bezüglich Größe und Taktung können auch mehr oder weniger als drei Mitnehmer- bzw. Eingriffselemente 39c vorgesehen sein. Als Mitnehmer- bzw. Eingriffselemente 39c sind hier einfach Plattenabschnitte vorgesehen, die senkrecht zur Förderrichtung an dem Umlaufgurt 39a befestigt sind. Der Umlaufförderer 39 ist derart in Bezug auf die Liftvorrichtung 36 und die Rückführbahn 33R angeordnet, dass ein gewendeter Kommissionierbehälter 1, der auf Höhe h_{H} der Halbloopingbahn 31 in die Liftvorrichtung 36 aufgenommen wird, bei Erreichen der Höhe h_{R} der Rückführbahn 33R aus der Liftvorrichtung 36 horizontal in die Rückführbahn 33R geschoben wird, indem eines der Mitnehmerelemente 39c an einem bodennahen Wandabschnitt des Kommissionierbehälters 1 bzw. dessen wannenartiger Stabilisierungsvorrichtung 5 zur Anlage kommt und den Kommissionierbehälter 1 in Förderrichtung des horizontalen Umlaufförderers 39 mitnimmt. Die Geschwindigkeit des horizontalen Umlaufförderers 39 ist auf die Geschwindigkeit der Liftvorrichtung 36 abgestimmt, um rechtzeitig einen Kommissionierbehälter weiterfördern zu können, der die Weitergabeposition auf Höhe h_{R} erreicht.

In **Fig. 15** **und** **17****,** **19 bis 22** ist jeweils ein Kommissionierbehälter 1 in der Liftvorrichtung 36 in Weitergabeposition auf Höhe h_{R} zur Weitergabe in die Rückführbahn 33R gezeigt.

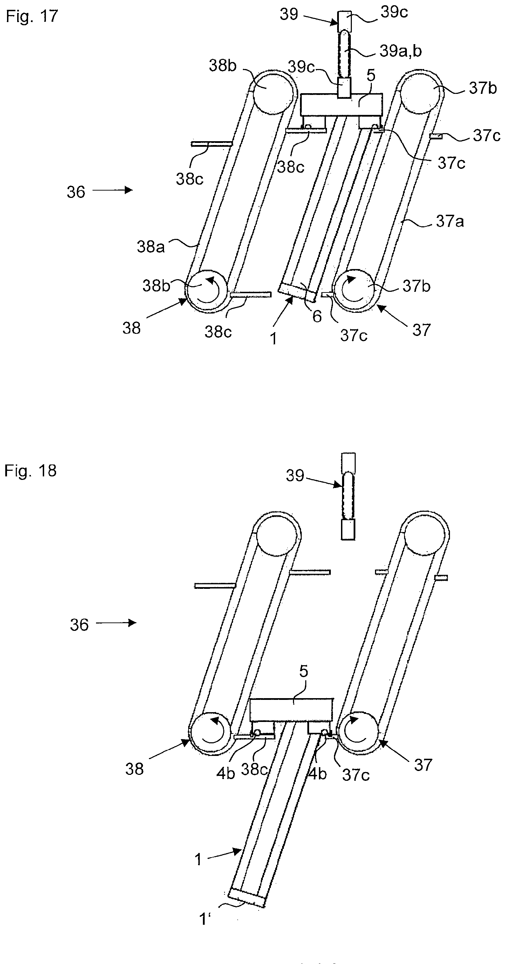

**Fig. 16** **und** **18** zeigen einen Kommissionierbehälter 1, der in der Liftvorrichtung 36 in Aufnahmeposition auf Höhe h_{H} entsprechend dem Ausgang der Halbloopingbahn 31 zu sehen ist. Die Liftvorrichtung 36 besteht in dem gezeigten Beispiel aus zwei Umlaufförderern 37, 38, die entsprechend der Neigung des Grundkörpers 6 gegenüber der Stand- bzw. Bodenfläche 5', die durch die wannenförmige Stabilisierungsvorrichtung 5 definiert wird, schräg verläuft, um den "krängenden" Kommissionierbehälter 1 glatt aus der Transportverpackung 100 herausheben zu können.

Jeder Umlaufförderer 37,38 besteht aus einem Paar parallel umlaufender Ketten, Riemen oder Gurte 37a,38a, die jeweils um zwei Umlenkrollen 37b,38b geführt angetrieben werden. In **Fig. 15** zeigen die schwarzen Pfeile die Umlaufrichtung der Gurte 37a,38a. An jedem Gurtpaar 37a,38a sind in gleichmäßigem Abstand jeweils drei Mitnehmer- bzw. Eingriffselemente 37c,38c angeordnet. Je nach Gegebenheiten und Anforderungen bezüglich Größe und Taktung können auch mehr oder weniger als drei Mitnehmer- bzw. Eingriffselemente 37c,38c vorgesehen sein, allerdings müssen beide Umlaufförderer 37,38 die gleiche Anzahl an Mitnehmer- bzw. Eingriffselementen 37c,38c aufweisen und deren Umlaufpositionen aufeinander abgestimmt sein, um den Kommissionierbehälter 1 exakt aufnehmen zu können, sodass dessen Grundkörper 6 parallel zu den Umlaufförderern 37,38 bewegt wird. Für den dargestellten Kommissionierbehälter 1 mit der wannenförmigen Stabilisierungsvorrichtung 5, an deren Rand die Mitnehmer- bzw. Eingriffselemente 37c,38c angreifen, sind deren Umlaufpositionen so abzustimmen, dass die einander zugewandten Mitnehmer- bzw. Eingriffselemente 37c,38c in der Aufwärtsbewegung auf gleicher Höhe gegenüber liegen. Für einen anderen Kommissionierbehälter, bei dem beispielsweise der Wannenrand unterschiedliche Höhen aufweist, oder der andere Eingriffsmöglichkeiten vorsieht, können auch davon abweichende Umlaufpositionen der jeweiligen Mitnehmer- bzw. Eingriffselemente 37c,38c vorgesehen sein, um den Grundkörper 6 in einer zu den Umlaufförderern 37,38 parallelen Bewegung zu führen.

Als Mitnehmer- bzw. Eingriffselemente 37c,38c sind auch hier Plattenabschnitte vorgesehen, die senkrecht zur Förderrichtung an den Umlaufgurtpaaren 37a,38a befestigt sind. Aufgrund der vorgesehenen nicht-mittigen Anordnung des geneigten Grundkörpers 6 in der wannenförmigen Stabilisierungsvorrichtung 5, mit der die Mitnehmer- bzw, Eingriffselemente 37c,38c zum Eingriff kommen, sind die plattenartigen Mitnehmer- bzw. Eingriffselemente 37c des behälternahen Umlaufförderers 37 schmäler als die plattenartigen Mitnehmer- bzw. Eingriffselemente 38c des behälterfernen Umlaufförderers 38, wie vor allem in **Fig. 17 und 18** gut zu sehen ist. Mit "behälternah" und "behälterfern" ist dabei der Abstand des Grundkörpers 6 zu dem jeweiligen Umlaufförderer 37,38 gemeint.

Anders als in den **Figuren 15 bis 22** dargestellt, eröffnet sich mit der Liftvorrichtung 36 als Trennvorrichtung die Möglichkeit, eine Rückführbahn auch in entgegengesetzter Richtung anzuschließen, wenn der horizontale Umlaufförderer 39 in entgegengesetzter Richtung betrieben würde, und/oder direkt die Rückführwendevorrichtung anzuschließen.

Ebenfalls nicht dargestellt ist eine denkbare Ausführungsform, in der eine Liftvorrichtung in einer Anlage für "normale" Kommissionierbehälter 1 eingesetzt wird. Abweichend von der dargestellten Liftvorrichtung 36, wird eine Liftvorrichtung für nicht-krängende Kommissionierbehälter senkrecht nach oben fördernde Umlaufförderer aufweisen, die symmetrisch von dem Grundkörper beabstandet sind und deren Mitnehmer- bzw. Eingriffselemente folglich gleich breit gestaltet sein können.

Nach erfolgter Trennung wird der entleerte Kommissionierbehälter 1 nach Durchlaufen einer weiteren Wendevorrichtung, so dass die Öffnung 1' des Kommissionierbehälters 1 wieder nach oben weist, durch die Steuerungsvorrichtung einem Auftrag zugeordnet und über Fördereinrichtungen 9 erneut zur Übergabestation verfahren.

Zum versandfertig Machen wird die Transportverpackung 100, in der sich nun die Artikel und ggf. auch die Zugabe befinden, und die bereits das Versandetikett aufweist, zur Verschließstation 40 transportiert, wo die Transportverpackung 100 ohne Zugabe von Füllstoffen durch Umschlagen bzw. Umkrempeln von der Öffnungsseite her verschlossen wird. Beispielsweise kann die Verschließstation dazu eine oder mehrere Faltvorrichtungen haben, beginnend mit einer Einlaufpassage, in der die gegenüberliegenden Seiten der Transportverpackung oben an der Öffnung zusammengeführt und gegebenenfalls auch vorgebogen oder vorzugsweise vorgeknickt werden. Hierzu kann die Einlaufpassage beispielsweise durch ein konvergierendes Schienenpaar oder ähnliches gebildet werden, das mit einer Profilschiene ergänzt wird, um den gewünschten Vorfalz (bzw. Biegung) zu erzeugen. Daran schließt sich zumindest eine weitere Faltvorrichtungen (oder Biegevorrichtungen) an, um zum Verschluss der Transportverpackung einen gefalteten Umschlag (oder eine umgekrempelte Biegung) von der Öffnungsseite her an der kontinuierlich weitergeförderten Transportverpackung zu erzeugen. Um die Artikel in ihrer Transportverpackung 100 rutschsicher zu halten, wird das Umschlagen bzw. Umkrempeln so oft durchgeführt, bis das Verpackungsvolumen entsprechend dem Inhalt minimiert ist. Der Umschlag- bzw. Umkrempelvorgang ist somit variabel gestaltet, hängt aber nur in gewissem Maß von der Füllmenge bzw. dem Füllvolumen ab, da das Format der Transportverpackung 100 entsprechend einer Menge/einem Volumen der Artikel eines Auftrags gewählt werden kann, um die Anzahl der zur Sicherung der Artikel erforderlichen Umschläge zu begrenzen.

Es kann daher beispielsweise vorgesehen sein, dass für die unterschiedlichen Formate der Transportverpackungen unterschiedliche Verschlussvorrichtungen vorgesehen sind, die sich vor allem hinsichtlich der Positionierung der Faltvorrichtungen in Bezug auf die Förderbahn für die Transportverpackung unterscheiden. So kann die Höhe der Einlaufpassage an die Höhe der Transportverpackung abgestimmt sein. In einer Verschließstation können damit unterschiedliche Verschlussvorrichtungen parallel betrieben werden, wobei die Zuordnung der gefüllten Transportverpackungen in Abhängigkeit ihres Formats automatisch gesteuert zur richtigen Verschlussvorrichtung erfolgt. Beispielsweise über eine Sensorik (Sensorik meint dabei einen oder mehrere Sensoren), die die Höhe der vorbeigeförderten Transportverpackungen oder die Etiketten erfasst, aus denen die entsprechenden Informationen zur Zuordnung der jeweiligen Transportverpackung ermittelbar sind. Grundsätzlich ist aber auch denkbar, dass die für die gesteuerte Zuordnung der Transportverpackungen zur richtigen Verschlussstation erforderliche Information auch nach der Trennung aus dem Identifizierungsmerkmal des Kommissionierbehälters, das die Steuerungsvorrichtung dem entsprechenden Auftrag und damit dem verwendeten Verpackungsformat zuordnen kann, erhalten werden kann, da die Transportverpackungen die Trennvorrichtung in der gleichen Reihenfolge verlassen wie die Kommissionierbehälter.

Falls vorgesehen ist, dass die Anzahl der Umschläge variabel ist und von der Füllhöhe der Artikel in der Transportverpackung abhängig ist, kann beispielsweise ein Füllhöhensensor eingesetzt werden, sodass die Anzahl der Falzvorgänge für jede Transportverpackung durch die Steuerungsvorrichtung bestimmt wird und die jeweilige Transportverpackung dann mit entsprechenden Fördervorrichtungen zu den dafür erforderlichen Faltvorrichtungen transportiert wird.

Der Umschlag wird noch fixiert. Dies kann bevorzugt durch Vernähen oder ein geeignetes doppelseitiges Klebeband, alternativ beispielsweise aber auch durch eine Heißverklebung oder Tackern erfolgen. Vorzugsweise können die Transportverpackungen vernäht werden, wobei die hierfür erforderliche Nähstation anschließend an die Faltvorrichtungen angeordnet werden kann. Der Verschluss durch Nähen mit automatischem Fadenabschneider kann im Einfaden-Kettenstich erfolgen, was dem Empfänger später ein einfaches Öffnen ermöglicht. Auch das Tackern als Fixierung des Verschlusses kann im Anschluss an das Falten erfolgen, allerdings sind getackerte Verschlüsse durch den Empfänger schwieriger zu öffnen und deshalb weniger bevorzugt. Die ebenfalls denkbare Fixierung mittels doppelseitigem Klebeband oder Heißkleber ist hingegen prozess- bzw. anlagentechnisch ungünstiger, da das Einfügen des Klebebands bzw. Heißklebers vor dem letzten Falzvorgang erfolgen muss, sodass hierfür eine entsprechende Vorrichtung zwischen die Faltvorrichtungen eingegliedert werden müsste.

Auch bei der Verschließstation sind wie bei der Einpackstation, der Zugabestation (Nachfüllen von Toner/Papier) und der Etikettierstation (Nachfüllen von Etikettenrollen) parallele Vorrichtungen vorgesehen, so dass im Störungsfall oder bei Nachfüllungs- oder Wartungsbedarf einer aktiven Vorrichtung eine bis dahin passive Vorrichtung automatisch den Betrieb übernimmt, wobei die Umschaltung der Zuförderung der zu verschließenden Transportverpackungen ebenfalls automatisch erfolgt, während in der anderen, nun passiven Vorrichtung das Klebeband bzw. anderes Klebematerial durch Mitarbeiter aufgefüllt werden kann.

Insgesamt gestattet die erfindungsgemäße Kommissionier- und Packanlage die Verwendung einfachster Förder- und Handhabungstechnikelemente durch nur Linearbewegungen und sorgt damit für höchste Anlagen- /Maschinenverfügbarkeit. Das erfindungsgemäße Verfahren ermöglicht eine sehr hohe Durchsatzdynamik - es sollen 10.000 Teile pro Stunde mit stabiler Prozesssicherheit durch geeignete Entkopplung durchgesetzt werden.

### BEZUGSZEICHENLISTE

- 1: Kommissionierbehälter
- 1': Öffnung
- 2a, 2b: niedrigste, höchste Stelle des Behälterrands
- 2a', 2b': niedrigere, höhere Kante des Behälterrands
- 3: Abrundung
- 4a, 4b: seitliche Längs-, Querrollen
- 5: Stabilisierungsvorrichtung
- 5': Bodenfläche
- 6: Behältergrundkörper
- 7: Behälterrahmen
- 8, 8': Schaumstoffkeil, Unterlegkeil
- 9: Fördereinrichtung
- 10: Übergabeplatz
- 11, 11': Kipprampe, Kippabschnitt
- 12: Übergabevorrichtung
- 13: Hubvorrichtung
- 14: Fördereinrichtung
- 15: Zuliefervorrichtung
- 16: Lichtschrankensensor
- 19: Zugabeplatz
- 20: Einpackplatz
- 21, 21': Transportverpackungs-Vorrichtung, Kassettenträger
- 210, 211, 212, 213, 214: geneigter Boden, Seitenwand, Rückwand, Gelenk, Palettenbasis
- 22: Fördereinrichtung
- 29: Etikettierstation
- 30: Umfüll- und Trennstation
- 31, 31', 31R: Halbloopingbahn, Führungsschiene, Rückführwendevorrichtung, Wendevorrichtung
- 32: Stabilisierungsbahn
- 33, 33R: ansteigende Rampe, Rückführbahn
- 34: Abförderbahn
- 35: Plattform
- 36, 36': Liftvorrichtung, Halteplatz
- 37: behälternaher Umlaufförderer
- 37a,b,c: Gurt, Umlenkrolle, schmales Eingriffselement
- 38: behälterferner Umlaufförderer
- 38a,b,c: Gurt, Umlenkrolle, breites Eingriffselement
- 39: horizontaler Umlaufförderer
- 39a,b,c: Gurt, Umlenkrolle, Eingriffselement
- 40: Verschließstation
- 100, 101: Transportverpackung, Öffnung
- A: Artikel
- S: Stapel
- t₁, t₂: schräge Aufwärtsbewegung, Zickzack-Aufwärtsbewegung
- α: Neigungswinkel Grundkörper

## Patentansprüche

1. Verfahren zum automatischen konsolidierten Kommissionieren und Verpacken von Artikeln (A) zum Versand, wobei ein Kommissionierbehälter (1) bereitgestellt wird, in dem Artikel (A) entsprechend einem Auftrag zusammengestellt werden, **umfassend die Schritte**
a) Anordnen des Kommissionierbehälters (1) an einem Übergabeplatz (10) und Überführen zumindest eines entsprechend dem Auftrag bereitgestellten Artikels (A) in den Kommissionierbehälter (1),
b) Verfahren des mit zumindest einem Artikel (A) gefüllten Kommissionierbehälters (1) an einen vorbestimmten Einpackplatz (20) und oberhalb des Einpackplatzes (20) Bereitstellen einer Transportverpackung (100) mit einer nach unten weisenden Öffnung (101), die zum Aufnehmen des Kommissionierbehälters (1) dimensioniert ist,
c) Anordnen des Kommissionierbehälters (1) durch die Öffnung (101) in der Transportverpackung (100),
d) Verfahren des in der Transportverpackung (100) angeordneten, gefüllten Kommissionierbehälters (1) zu einer Umfüll- und Trennstation (30),
e) Umfüllen des zumindest einen Artikels (A) aus dem Kommissionierbehälter (1) in die Transportverpackung (100) mittels einer Wendebewegung in Bezug auf die Vertikale,
f) Trennen des Kommissionierbehälters (1) von der Transportverpackung (100), in der der zumindest eine Artikel (A) vorliegt, und
g) Verschließen der Transportverpackung (100),
wobei alle Verfahrensschritte automatisiert maschinell in einem kontinuierlichen Prozess durchgeführt werden.

2. Verfahren nach Anspruch 1, wobei in Schritt a) der Kommissionierbehälter (1) an den Übergabeplatz (10) verfahren wird und mit seiner Öffnung (1') in Richtung einer Artikel-Zuliefervorrichtung (15) gekippt wird, sodass der zumindest eine entsprechend dem Auftrag von der Zuliefervorrichtung (15) bereitgestellte Artikel (A) in den Kommissionierbehälter (1) rutscht.

3. Verfahren nach Anspruch 2, wobei in Schritt a) der Kommissionierbehälter (1) so an den Übergabeplatz (10) verfahren wird, dass eine Seite des Kommissionierbehälters (1) zu der Artikel-Zuliefervorrichtung (15) weist,
- die einen niedrigsten Punkt (2a) oder eine niedrigere Kante (2a') an dem die Öffnung (1') begrenzenden Behälterrand aufweist, und/oder
- an der eine spitzwinklige Seite eines Keils (8), der am Boden des Kommissionierbehälters (1) angeordnet ist, vorliegt.

4. Verfahren nach zumindest einem der Ansprüche 1 bis 3, wobei das Verfahren zumindest einen der folgenden Schritte umfasst:
- entsprechend dem Auftrag Wiederholen von Schritt a) für zumindest einen weiteren Artikel (A) an einem weiteren vorbestimmten oder an demselben Übergabeplatz (20),
- vor Schritt b) Verfahren des Kommissionierbehälters (1) an einen vorbestimmten Zugabeplatz (19) und Überführen einer vorbestimmten Zugabe in den Kommissionierbehälter (1),
- in Schritt b) zum Bereitstellen der Transportverpackung (100) Selektieren einer Transportverpackung (100) mit einem bestimmten Format entsprechend einer Vorgabe, die durch eine Menge und/oder ein Volumen der Artikel (A) des Auftrags definiert ist, aus einer Magazinvorrichtung, Aufspannen und Halten der Transportverpackung (100),
- in Schritt c) aufwärts Bewegen des Kommissionierbehälters (1) zum Einführen in die Transportverpackung (100) durch die Öffnung (101),
während Schritt d) Passieren einer Etikettierstation (29) und Etikettieren der Transportverpackung (100),
- in Schritt e) bei der Wendebewegung, die vorzugsweise um 180° beträgt, Führen des in der Transportverpackung (100) angeordneten, gefüllten Kommissionierbehälters (1) in einer Halbloopingbahn (31), wobei ein Boden der Transportverpackung (100) durch eine entsprechende Stabilisierungsbahn (32) gestützt wird,
- in Schritt f) Abheben des Kommissionierbehälters (1) aus der Transportverpackung (100) durch Führen des Kommissionierbehälters (1) und der Transportverpackung (100) entlang in Bezug auf die Vertikale divergierenden Bahnen (33, 34), wobei der Kommissionierbehälter (1) bevorzugt entlang einer ansteigenden Rampe (33) geführt wird,
- in Schritt g) zum Verschließen Umschlagen oder Umkrempeln der Transportverpackung (100) von der Öffnungsseite her bis zu dem zumindest einen Artikel und Fixieren des umgeschlagenen oder umgekrempelten Abschnitts,
- parallel zu Schritt g) Rückführen des entleerten Kommissionierbehälters (1) unter Durchführung einer weiteren Wendebewegung in Bezug auf die Vertikale und Verfahren des Kommissionierbehälters (1) zur Übergabestation zur Übernahme von Artikeln (A) gemäß einem weiteren Auftrag.

5. Kommissionier- und Packanlage zum automatischen Kommissionieren und Verpacken von Artikeln (A) zum Versand, wobei die Kommissionier- und Packanlage eine Mehrzahl Kommissionierbehälter (1) und eine Mehrzahl Fördereinrichtungen (9, 14, 22) für Kommissionierbehälter (1) und Zuliefer- und Übergabevorrichtungen für Artikel (A) aufweist,
wobei die Fördereinrichtungen (9, 14, 22) für Kommissionierbehälter (1) zumindest eine Übergabestation zur Übergabe der Artikel (A) in die Kommissionierbehälter (1) und zumindest eine Einpackstation zum Einpacken der Artikel (A) in eine Transportverpackung (100) verbinden,
**dadurch gekennzeichnet, dass**
die Einpackstation einen Einpackplatz (20) aufweist, über dem eine Vorrichtung (21) zur Bereitstellung der Transportverpackung (100) mit einer nach unten weisenden Öffnung (101) angeordnet ist, die zum temporären Aufnehmen des Kommissionierbehälters (1) dimensioniert ist, wobei der Einpackplatz (20) oder die Vorrichtung zur Bereitstellung der Transportverpackung (100) oder beide zur Ausführung einer Relativbewegung zueinander ausgebildet sind,
und dass
die Kommissionier- und Packanlage eine Umfüil- und Trennstation (30) aufweist, die sich über Fördereinrichtungen (9, 14, 22) für Kommissionierbehälter (1) an die Einpackstation anschließt, und die eine Wendevorrichtung (31,32) für die Kommissionierbehälter (1) zur Durchführung einer Wendebewegung in Bezug auf die Vertikale und nachfolgend eine Trennvorrichtung (33,34) zum Trennen des Kommissionierbehälters (1) von der Transportverpackung (100) aufweist.

6. Kommissionier- und Packanlage nach Anspruch 5,
**dadurch gekennzeichnet, dass**
die Kommissionier- und Packanlage eine Rückführeinrichtung für die Kommissionierbehälter (1) aufweist,
wobei die Rückführeinrichtung für die Kommissionierbehälter (1) eine zweite Wendevorrichtung (31R) für die Kommissionierbehälter (1) zur Durchführung einer Wendebewegung in Bezug auf die Vertikale aufweist.

7. Kommissionier- und Packanlage nach Anspruch 5 oder 6,
**dadurch gekennzeichnet, dass**
die Kommissionier- und Packanlage eine Verschließstation (40) aufweist, wobei die Verschließstation (40) sich zum Verschließen der Transportverpackung (100) an die Umfüll- und Trennstation (30) anschließt, wobei die Verschließstation (40) bevorzugt eine Vorrichtung zum Umschlagen oder Umkrempeln der Transportverpackung (100) von der Öffnungsseite her aufweist.

8. Kommissionier- und Packanlage nach zumindest einem der Ansprüche 5 bis 7,
**dadurch gekennzeichnet, dass**
die Übergabestation eine Mehrzahl Übergabeplätze (10) aufweist, denen jeweils eine Kipprampe (11) zugeordnet ist, die eine Ebene des Übergabeplatzes (10) mit einer darüber liegenden Ebene einer Zuliefervorrichtung (15) für die Artikel (A) allein oder in Zusammenwirkung mit einer Übergabevorrichtung (12) der Zuliefervorrichtung (15) in einem vorbestimmten Neigungswinkel verbindet, wobei die Kipprampe (11) dazu ausgebildet ist, den Kommissionierbehälter (1) in dem vorbestimmten Neigungswinkel zu stützen, wobei eine Öffnung (1') des Kommissionierbehälters (1) zur Aufnahme der Artikel (A) in Richtung der Zuliefervorrichtung (15) weist.

9. Kommissionier- und Packanlage nach zumindest einem der Ansprüche 5 bis 8, **dadurch gekennzeichnet, dass**
die Kommissionier- und Packanlage
- eine Zugabestation (19) für eine vorbestimmte Zugabe aufweist, die entlang der Fördereinrichtungen (9, 14, 22) zwischen der Übergabestation (10) und der Einpackstation (20) angeordnet ist, und/oder
- eine Etikettierstation (29) zum Etikettieren der Transportverpackung (100) aufweist, die entlang der Fördereinrichtungen (9, 14, 22) zwischen der Einpackstation (20) und der Umfüll- und Trennstation (30) angeordnet ist.

10. Kommissionier- und Packanlage nach Anspruch 9,
**dadurch gekennzeichnet, dass**
im Falle einer vorhandenen Zugabestation (19) eine Druckervorrichtung zum Ausdrucken von Begleitformularen aufweist, wobei die Druckervorrichtung derart ausgebildet ist, dass eine Formularausgabe oberhalb einer durch die Öffnung (1') der entlang der Fördereinrichtungen (9, 14, 22) geförderten Kommissionierbehälter (1) definierten Ebene liegt.

11. Kommissionier- und Packanlage nach zumindest einem der Ansprüche 5 bis 10,
**dadurch gekennzeichnet, dass**
- die Vorrichtung (21) zur Bereitstellung der Transportverpackung (100) eine Magazinvorrichtung mit Kassettenträgern (21') für Transportverpackungen (100) mit unterschiedlichen Formaten, eine Selektionsvorrichtung zur Auswahl und Vereinzelung einer Transportverpackung (100) eines bestimmten Formats und eine Aufspann- und Halterungsvorrichtung für eine entfaltete Transportverpackung (100) mit nach unten weisender Öffnung (101) aufweist, und/oder
- die Relativbewegung zwischen dem Einpackplatz (20) und der Vorrichtung zur Bereitstellung der Transportverpackung (100) durch zumindest eine Hubvorrichtung (13) bereitgestellt wird, die mit dem Einpackplatz (20) und/oder der Vorrichtung zur Bereitstellung der Transportverpackung (100) verbunden oder verbindbar ist, wobei die Hubvorrichtung (13) vorzugsweise zumindest einen Hubzylinder (13), eine Hübschere, eine Aufzugs- oder Liftvorrichtung, umfassend zumindest einen Umlaufförderer, aufweist.

12. Kommissionier- und Packanlage nach zumindest einem der Ansprüche 5 bis 11,
**dadurch gekennzeichnet, dass**
die Umfüll- und Trennstation (30) als Wendevorrichtung eine Halbloopingbahn (31), die vorzugsweise eine 180°-Wende bereitstellt, mit Führungsmitteln für den Kommissionierbehälter (1) und eine parallel verlaufende Stabilisierungsbahn (32) zur Stützung eines Bodens der Transportverpackung (100) aufweist,
und/oder dass
die Umfüll- und Trennstation (30) als Trennvorrichtung
- bezüglich der Vertikalen divergierende Bahnen (33,34) jeweils zur Führung des Kommissionierbehälters (1) und der Transportverpackung (100) aufweist, wobei sich die obere Bahn (33) zur Führung der Kommissionierbehälter (1) an die Halbloopingbahn (31) und die untere Bahn (34) zur Führung der Transportverpackung (100) an die Stabilisierungsbahn (32) anschließen, wobei bevorzugt die obere Bahn (33) zur Führung der Kommissionierbehälter (1) als ansteigende Rampe (33) ausgebildet ist, wobei die Führungsmittel in der Halbloopingbahn (31) und in der oberen Bahn (33) bevorzugt seitliche Führungsschienen (31') sind, die zum Eingriff mit Rollvorrichtungen (4a, 4b) des Kommissionierbehälters (1), die in Bodennähe seitlich am Kommissionierbehälter (1) angeordnet sind, ausgebildet sind,
oder
- eine Liftvorrichtung (36) für die Kommissionierbehälter (1), die sich an die Halbloopingbahn (31) anschließt, und einen Halteplatz (36') für die Transportverpackungen (100) unterhalb der Liftvorrichtung (36) entlang einer Abförderbahn (34) aufweist, die sich an die Stabilisierungsbahn (32) anschließt, wobei die Liftvorrichtung (36) vorzugsweise zumindest einen Umlaufförderer (37,38) aufweist, der mit zumindest einem Eingriffselement (37c,38c) für den Eingriff mit einem gewendeten Kommissionierbehälter (1) ausgebildet ist.

13. Kommissionier- und Packanlage nach zumindest einem der Ansprüche 5 bis 12,
**dadurch gekennzeichnet, dass**
die Kommissionier- und Packanlage zumindest eine Steuerungsvorrichtung aufweist, die mit sämtlichen Vorrichtungen und Fördereinrichtungen der Anlage zum automatischen konsolidierten Kommissionieren und Verpacken der Artikel (A) zum Versand in einem kontinuierlichen Prozess verbunden ist, wobei die Vorrichtungen und Fördereinrichtungen der Anlage vorzugsweise zumindest zum Teil mit einer Sensorik ausgestattet sind, die zur Regelung der Vorgänge mit der zumindest einen Steuerungsvorrichtung gekoppelt ist.

14. Kommissionier- und Packanlage nach Anspruch 13,
**dadurch gekennzeichnet, dass**
die Kommissionier- und Packanlage
- eine Sensorik zur Erfassung eines Identifizierungsmerkmals jedes Kommissionierbehälters (1) für die Übergabestation, Einpackstation, Zugabestation (19), Etikettierstation (29), Verschließstation (40) und/oder für alle fördertechnischen Entscheidungspositionen entlang der Fördereinrichtungen (9,14,22) aufweist, und/oder
- Sensorvorrichtungen (16) für die Übergabestation, insbesondere an den Übergabevorrichtungen (12), zur Erfassung einer erfolgten Artikelübergabe und/oder zur Erfassung von aus dem Kommissionierbehälter (1) in der Übergabeposition überstehenden Artikeln (A) aufweist, und/oder
- eine Sensorik für die Vorrichtung zur Bereitstellung der Transportverpackung (100) an jeder Magazinvorrichtung zur Überwachung eines Vorrats an Transportverpackungen (100) und zur automatischen Zuordnung neuer Transportverpackungen (100), insbesondere an jedem Kassettenträger (21') zur Feststellung und Steuerung des Füllstands und der Position des jeweiligen Kassettenträgers (21') aufweist, und/oder
- eine Sensorik für die Verschließstation (40) zur Erfassung einer Höhe der vorbeigeförderten Transportverpackungen (10) zur Zuordnung der jeweiligen Transportverpackung (100) in Abhängigkeit ihres Formats, und/oder
- einen Füllhöhensensor für die Verschließstation (40) zur Erfassung der Füllhöhe der Artikel in der Transportverpackung (100) zur Festlegung einer Anzahl der Umschläge zum Verschließen der Transportverpackung (100) und zur Zuordnung zu den entsprechenden Vorrichtungen zum Umschlagen oder Umkrempeln der Transportverpackung (100) von der Öffnungsseite.

15. Verwendung eines Kommissionierbehälters (1) in einer Kommissionier- und Packanlage nach zumindest einem der Ansprüche 5 bis 13 zur Durchführung eines Verfahrens nach zumindest einem der Ansprüche 1 bis 4,
**dadurch gekennzeichnet, dass**
der Kommissionierbehälter (1)
- eine Öffnung (1') aufweist, die gegenüber einer Bodenfläche des Kommissionierbehälters (1) geneigt ist, und
- in Bodennähe seitliche Rollvorrichtungen (4a, 4b) aufweist.

16. Verwendung nach Anspruch 15,
**dadurch gekennzeichnet, dass**
der Kommissionierbehälter (1) einen Grundkörper (6) aufweist, der die Öffnung (1') aufweist und in einer die Standfläche vergrößernden wannenartigen Stabilisierungsvorrichtung (5) angeordnet ist, die die Bodenfläche des Kommissionierbehälters (1) bereitstellt und an der die seitlichen Rollvorrichtungen (4a, 4b) angeordnet sind.

17. Verwendung nach Anspruch 16,
**dadurch gekennzeichnet, dass**
- der Grundkörper (6) rechtwinklig zur Bodenfläche in der Stabilisierungsvorrichtung (5) angeordnet ist, wobei die gegenüber der Bodenfläche des Kommissionierbehälters (1) geneigte Öffnung (1') dadurch bereitgestellt wird, dass ein die Öffnung (1') begrenzender Behälterrand einen niedrigsten Punkt (2a) und einen höchsten Punkt (2b) aufweist, oder
- der Grundkörper (6) um einen vorbestimmten Winkel (α) zur Bodenfläche in der Stabilisierungsvorrichtung (5) geneigt angeordnet ist, wobei die gegenüber der Bodenfläche des Kommissionierbehälters (1) geneigte Öffnung (1') mit einer niedrigeren Kante (2a') und einer höheren Kante (2b') bereitgestellt wird.

18. Verwendung nach zumindest einem der Ansprüche 15 bis 17,
**dadurch gekennzeichnet, dass**
in dem Grundkörper (6) ein Keil (8), vorzugsweise aus einem elastisch stoßdämpfenden Material, an dem Boden angeordnet ist.

19. Verwendung nach Anspruch 18,
**dadurch gekennzeichnet, dass**
eine spitzwinklige Seite des Keils (8) auf der Seite des Grundkörpers (6) angeordnet ist, die den niedrigsten Punkt (2a) oder die niedrigere Kante (2a') an dem die Öffnung (1') begrenzenden Behälterrand aufweist.

## Claims

1. A method for automatic consolidated order-picking and packaging of articles (A) for shipment, wherein an order-picking container (1) is provided, in which articles (A) are collected in accordance with an order,
**comprising the steps**
a) arranging the order-picking container (1) at a transfer location (10) and transferring at least one article (A) provided in accordance with the order into the order-picking container (1),
b) moving the order-picking container (1) filled with at least one article (A) to a predetermined packing location (20) and, above the packing location (20), providing a transport packaging (100) with a downwardly pointing opening (101) which is dimensioned to receive the order-picking container (1),
c) arranging the order-picking container (1) through the opening (101) in the transport packaging (100),
d) moving the filled order-picking container (1) arranged in the transport packaging (100) to a retransferring and separating station (30),
e) retransferring the at least one article (A) from the order-picking container (1) into the transport packaging (100) by means of a turning movement in relation to the vertical,
f) separating the order-picking container (1) from the transport packaging (100) in which the at least one article (A) is present, and
g) closing the transport packaging (100),
wherein all method steps are performed in automated fashion by machine in a continuous process.

2. The method as claimed in claim 1, wherein, in step a), the order-picking container (1) is moved to the transfer location (10) and is tilted with its opening (1') in the direction of an article supply apparatus (15), such that the at least one article (A) provided in accordance with the order by the supply apparatus (15) slides into the order-picking container (1).

3. The method as claimed in claim 2, wherein, in step a), the order-picking container (1) is moved to the transfer location (10) such that a side of the order-picking container (1)
- which has a lowest point (2a) or a lower edge (2a') at the container margin that delimits the opening (1'), and/or
- at which an acute-angled side of a wedge (8) which is arranged on the base of the order-picking container (1) is present,
points toward the article supply apparatus (15).

4. The method as claimed in at least one of claims 1 to 3, wherein the method comprises at least one of the following steps:
- in accordance with the order, repeating step a) for at least one further article (A) at a further predetermined or at the same transfer location (20),
- before step b), moving the order-picking container (1) to a predetermined additional-material location (19) and transferring predetermined additional material into the order-picking container (1),
- in step b), for the provision of the transport packaging (100), selecting a transport packaging (100) with a particular format in accordance with a specification, which is defined by a quantity and/or a volume of the articles (A) of the order, from a magazine apparatus, setting up and holding the transport packaging (100),
- in step c), moving the order-picking container (1) upward in order to insert it into the transport packaging (100) through the opening (101),
during step d), passing a labelling station (29) and labelling the transport packaging (100),
- in step e), during the turning movement, which is preferably through 180°, guiding the filled order-picking container (1), which is arranged in the transport packaging (100), in a half-looping track (31), wherein a base of the transport packaging (100) is supported by a corresponding stabilizing track (32),
- in step f), lifting the order-picking container (1) out of the transport packaging (100) by guiding the order-picking container (1) and the transport packaging (100) along tracks (33, 34) which diverge in relation to the vertical, wherein the order-picking container (1) is preferably guided along a rising ramp (33),
- in step g), for the closure, folding over or rolling up the transport packaging (100) proceeding from the opening side as far as the at least one article, and fixing the folded-over or rolled-up portion,
- in parallel with step g), returning the emptied order-picking container (1), performing a further turning movement in relation to the vertical, and moving the order-picking container (1) to the transfer station in order to pick up articles (A) in accordance with a further order.

5. An order-picking and packing installation for automatic order-picking and packaging of articles (A) for shipment, wherein the order-picking and packing installation has a multiplicity of order-picking containers (1) and a multiplicity of conveying devices (9, 14, 22) for order-picking containers (1) and supply and transfer apparatuses for articles (A),
wherein the conveying devices (9, 14, 22) for order-picking containers (1) connect at least one transfer station for transferring the articles (A) into the order-picking containers (1) and at least one packing station for packing the articles (A) into a transport packaging (100),
**characterized in that**
the packing station has a packing location (20), above which there is arranged an apparatus (21) for providing the transport packaging (100) with a downwardly pointing opening (101) which is dimensioned for temporarily receiving the order-picking container (1), wherein the packing location (20) or the apparatus for providing the transport packaging (100), or both, are designed to perform a relative movement with respect to one another,
and **in that**
the order-picking and packing installation has a retransferring and separating station (30) which, via conveying devices (9, 14, 22) for order-picking containers (1), follows the packing station, and which has a turning apparatus (31, 32) for the order-picking containers (1) for performing a turning movement in relation to the vertical, and, following this, a separating apparatus (33, 34) for separating the order-picking container (1) from the transport packaging (100).

6. The order-picking and packing installation as claimed in claim 5,
**characterized in that**
the order-picking and packing installation has a return device for the order-picking containers (1),
wherein the return device for the order-picking containers (1) has a second turning apparatus (31R) for the order-picking containers (1) for performing a turning movement in relation to the vertical.

7. The order-picking and packing installation as claimed in claim 5 or 6,
**characterized in that**
the order-picking and packing installation has a closure station, wherein the closure station (40), for the closure of the transport packaging (100), follows the retransferring and separating station (30), wherein the closure station (40) preferably has an apparatus for folding over or rolling up the transport packaging (100) proceeding from the opening side.

8. The order-picking and packing installation as claimed in at least one of claims 5 to 7,
**characterized in that**
the transfer station has a multiplicity of transfer locations (10), each of which is assigned a tilting ramp (11) which, at a predetermined inclination angle, connects a plane of the transfer location (10) to a plane, situated thereabove, of a supply apparatus (15) for the articles (A), on its own or in interaction with a transfer apparatus (12) of the supply apparatus (15), wherein the tilting ramp (11) is designed to support the order-picking container (1) at the predetermined inclination angle, wherein an opening (1') of the order-picking container (1) points in the direction of the supply apparatus (15) in order to receive the articles (A).

9. The order-picking and packing installation as claimed in at least one of claims 5 to 8,
**characterized in that**
the order-picking and packing installation
- has an additional-material station (19) for predetermined additional material, which additional-material (19) station is arranged along the conveying devices (9, 14, 22) between the transfer station (10) and the packing station (20), and/or
- has a labelling station (29) for labelling the transport packaging (100), which labelling station (29) is arranged along the conveying devices (9, 14, 22) between the packing station (20) and the retransferring and separating station (30).

10. The order-picking and packing installation as claimed in claim 9,
**characterized in that,**
if an additional-material station (19) is present, has a printer apparatus for printing accompanying documentation, wherein the printer apparatus is configured such that a documentation output is situated above a plane defined by the opening (1') of the order-picking containers (1) conveyed along the conveying devices (9, 14, 22).

11. The order-picking and packing installation as claimed in at least one of claims 5 to 10,
**characterized in that**
- the apparatus (21) for providing the transport packaging (100) has a magazine apparatus with cassette carriers (21') for transport packagings (100) with different formats, a selection apparatus for selecting and isolating a transport packaging (100) of a particular format, and a setting-up and holding apparatus for an unfolded transport packaging (100) with a downwardly pointing opening (101), and/or
- relative movement between the packing location (20) and the apparatus for providing the transport packaging (100) is provided by means of at least one lifting apparatus (13) which is connected or connectable to the packing location (20) and/or to the apparatus for providing the transport packaging (100), wherein the lifting apparatus (13) preferably has at least one lifting cylinder (13), a lifting scissor mechanism, an elevator or lift apparatus, comprising at least one circulating conveyor.

12. The order-picking and packing installation as claimed in at least one of claims 5 to 11,
**characterized in that**
the retransferring and separating station (30) has, as a turning apparatus, a half-looping track (31), which preferably provides a 180° turn, with guide means for the order-picking container (1), and a stabilizing track (32) which runs parallel and which serves for supporting a base of the transport packaging (100),
and/or **in that**
the retransferring and separating station (30) has, as a separating apparatus,
- tracks (33, 34) which diverge with respect to the vertical, in each case for guiding the order-picking container (1) and the transport packaging (100), wherein the upper track (33) for guiding the order-picking containers (1) adjoins the half-looping track (31), and the lower track (34) for guiding the transport packaging (100) adjoins the stabilizing track (32), wherein preferably, the upper track (33) for guiding the order-picking containers (1) is formed as a rising ramp (33), wherein the guide means in the half-looping track (31) and in the upper track (33) are preferably lateral guide rails (31') which are designed to engage with rolling apparatuses (4a, 4b) of the order-picking container (1), which rolling apparatuses (4a, 4b) are arranged laterally on the order-picking container (1) in the vicinity of the base,
or
- a lift apparatus (36) for the order-picking containers (1), which lift apparatus (36) adjoins the half-looping track (31), and a holding location (36') for the transport packagings (100) below the lift apparatus (36) along a conveying-away track (34) which adjoins the stabilizing track (32), wherein the lift apparatus (36) preferably has at least one circulating conveyor (37, 38) which is formed with at least one engagement element (37c, 38c) for the engagement with a turned order-picking container (1).

13. The order-picking and packing installation as claimed in at least one of claims 5 to 12,
**characterized in that**
the order-picking and packing installation has at least one control apparatus which is connected to all apparatuses and conveying devices of the installation for the purposes of automatic consolidated order-picking and packaging of the articles (A) for shipment in a continuous process, wherein the apparatuses and conveying devices of the installation are preferably at least partially equipped with a sensor arrangement which, for the closed-loop control of the processes, is coupled to the at least one control apparatus.

14. The order-picking and packing installation as claimed in claim 13,
**characterized in that**
the order-picking and packing installation
- has a sensor arrangement for detecting an identifying feature of each order-picking container (1) for the transfer station, packing station, additional-material station (19), labelling station (29), closure station (40) and/or for all conveyance-relevant decision positions along the conveying devices (9, 14, 22), and/or
- has sensor apparatuses (16) for the transfer station, in particular at the transfer apparatuses (12), for the purposes of detecting a completed article transfer and/or for the purposes of detecting articles (A) protruding out of the order-picking container (1) in the transfer position, and/or
- has a sensor arrangement for the apparatus for providing the transport packaging (100) at each magazine apparatus for the purposes of monitoring a stock of transport packagings (100) and for the purposes of automatically assigning new transport packagings (100), in particular at each cassette carrier (21') for the purposes of determining and controlling the fill level and the position of the respective cassette carrier (21'), and/or
- has a sensor arrangement for the closure station (40) for the purposes of detecting a height of the transport packagings (10) being conveyed past in order to assign the respective transport packaging (100) in a manner dependent on its format, and/or
- a fill height sensor for the closure station (40) for the purposes of detecting the fill height of the articles in the transport packaging (100) in order to determine a number of folds for closing the transport packaging (100) and for assignment to the corresponding apparatuses for the folding-over or rolling-up of the transport packaging (100) from the opening side.

15. A use of an order-picking container (1) in an order-picking and packing installation as claimed in at least one of claims 5 to 13 for carrying out a method as claimed in at least one of claims 1 to 4,
**characterized in that**
the order-picking container (1)
- has an opening (1') which is inclined relative to a base surface of the order-picking container (1), and
- has lateral rolling apparatuses (4a, 4b) in the vicinity of the base.

16. The use as claimed in claim 15,
**characterized in that**
the order-picking container (1) has a main body (6) which has the opening (1') and which is arranged in a trough-like stabilizing apparatus (5) which increases the standing surface and which provides the base surface of the order-picking container (1) and on which the lateral rolling apparatuses (4a, 4b) are arranged.

17. The use as claimed in claim 16,
**characterized in that**
- the main body (6) is arranged at right angles to the base surface in the stabilizing apparatus (5), wherein the opening (1') that is inclined relative to the base surface of the order-picking container (1) is provided by virtue of a container margin that delimits the opening (1') having a lowest point (2a) and a highest point (2b), or
- the main body (6) is arranged so as to be inclined by a predetermined angle (α) with respect to the base surface in the stabilizing apparatus (5), wherein the opening (1') that is inclined relative to the base surface of the order-picking container (1) is provided with a lower edge (2a') and a higher edge (2b').

18. The use as claimed in at least one of claims 15 to 17,
**characterized in that**
a wedge (8), preferably composed of an elastically shock-damping material, is arranged on the base in the main body (6).

19. The use as claimed in claim 18,
**characterized in that**
an acute-angled side of the wedge (8) is arranged on that side of the main body (6) which has the lowest point (2a) or the lower edge (2a') at the container margin that delimits the opening (1').

## Revendications

1. Procédé de préparation de commandes et d'emballage consolidé automatique d'articles (A) destinés à l'expédition, un conteneur de prélèvement (1) dans lequel des articles (A) sont regroupés conformément à une commande, étant mis à disposition,
**comprenant les étapes**
a) Disposer du conteneur de prélèvement (1) dans un point de transfert (10) et transférer au moins d'un article (A) mis à disposition conformément à la commande dans le conteneur de prélèvement (1),
b) Déplacer du conteneur de prélèvement (1) rempli au moins d'un article (A) dans un point d'emballage (20) prédéfini et, au-dessus du point d'emballage (20), mettre à disposition d'un emballage de transport (100) avec une ouverture (101) tournée vers le bas, qui est dimensionnée pour recevoir le conteneur de prélèvement (1),
c) Disposer du conteneur de prélèvement (1) par l'ouverture (101) dans l'emballage de transport (100),
d) Déplacer du conteneur de prélèvement (1) rempli, disposé dans l'emballage de transport (100), vers une station de transvasement et de séparation (30),
e) Transvaser au moins d'un article (A) du conteneur de prélèvement (1) dans l'emballage de transport (100) par un mouvement de renversement par rapport à la verticale,
f) Séparer du conteneur de prélèvement (1) de l'emballage de transport (100) dans lequel se trouve au moins un article (A) et
g) Fermer de l'emballage de transport (100),
toutes les étapes du procédé étant réalisées de façon mécanique et automatisée dans un processus continu.

2. Procédé conformément à la revendication 1, dans l'étape a), le conteneur de prélèvement (1) étant déplacé sur le point de transfert (10) et étant basculé avec son ouverture (1') en direction d'un dispositif de livraison d'articles (15) de sorte qu'au moins un article (A) mis à disposition par le dispositif de livraison (15) conformément à la commande glisse dans le conteneur de prélèvement (1).

3. Procédé conformément à la revendication 2, dans l'étape a), le conteneur de prélèvement (1) étant déplacé sur le point de transfert (10) de façon à ce qu'un côté du conteneur de prélèvement (1) soit tourné vers le dispositif de livraison d'articles (15),
- qui présente un point le plus bas (2a) ou un bord plus bas (2a') sur la paroi du conteneur limitant l'ouverture (1') et/ou
- sur lequel se trouve un côté à angle aigu d'une clavette (8) qui est disposée au fond du conteneur de prélèvement (1),

4. Procédé conformément au moins à l'une des revendications 1 à 3, le procédé comprenant au moins l'une des étapes suivantes:
- conformément à la commande, répéter de l'étape a) pour au moins un autre article (A) sur un autre point de transfert (20) prédéfini ou sur le même point de transfert,
- avant l'étape b), déplacer du conteneur de prélèvement (1) sur un point d'ajout (19) prédéfini et transférer d'un ajout prédéfini dans le conteneur de prélèvement (1),
- dans l'étape b) pour la mise à disposition de l'emballage de transport (100), sélecter d'un emballage de transport (100) avec un format défini conformément à une spécification qui est définie par une quantité et/ou un volume d'articles (A) de la commande, dans un dispositif chargeur, ouvrir et maintenir de l'emballage de transport (100),
- dans l'étape c), déplacer vers le haut du conteneur de prélèvement (1) pour introduire dans l'emballage de transport (100) par l'ouverture (101),
pendant l'étape d), passage dans une station d'étiquetage (29) et étiqueter de l'emballage de transport (100),
- dans l'étape e) lors du mouvement de renversement qui est effectué de préférence à 180°, guider du conteneur de prélèvement (1) rempli, disposé dans l'emballage de transport (100), dans une voie en demi-boucle (31), un fond de l'emballage de transport (100) étant soutenu par une voie de stabilisation (32) appropriée,
- dans l'étape f), lever du conteneur de prélèvement (1) de l'emballage de transport (100) par le guider du conteneur de prélèvement (1) et de l'emballage de transport (100) le long de voies (33, 34) divergentes par rapport à la verticale, le conteneur de prélèvement (1) étant de préférence guidé le long d'une rampe montante (33),
- dans l'étape g) pour fermer, rabatter ou retourner de l'emballage de transport (100) depuis la face d'ouverture jusqu'à au moins un article et fixer de la partie rabattue ou retournée,
- parallèlement à l'étape g), retourner du conteneur de prélèvement (1) vidé avec la réalisation d'un autre mouvement de renversement par rapport à la verticale et déplacer du conteneur de prélèvement (1) vers la station de transfert pour la prise en charge d'articles (A) conformément à une autre commande.

5. Installation de préparation de commandes et d'emballage pour la préparation de commandes et l'emballage automatisés d'articles (A) destinés à l'expédition, l'installation de préparation de commandes et d'emballage présentant une pluralité de conteneurs de prélèvement (1) et une pluralité de convoyeurs (9, 14, 22) pour les conteneurs de prélèvement (1) et les dispositifs de livraison et de transfert pour articles (A),
les convoyeurs (9, 14, 22) pour les conteneurs de prélèvement (1) reliant au moins une station de transfert pour le transfert des articles (A) dans les conteneurs de prélèvement (1) et au moins une station d'emballage pour l'emballage des articles (A) dans un emballage de transport (100),
**caractérisée en ce que**
la station d'emballage présente un point d'emballage (20) au-dessus duquel est disposé un dispositif (21) pour la mise à disposition de l'emballage de transport (100) avec une ouverture (101) tournée vers le bas, qui est dimensionnée pour la réception temporaire du conteneur de prélèvement (1), le point d'emballage (20) ou le dispositif de mise à disposition de l'emballage de transport (100) ou les deux étant conçus pour l'exécution d'un mouvement relatif l'un par rapport à l'autre,
et **en ce que**
l'installation de préparation de commandes et d'emballage présente une station de transvasement et de séparation (30) qui est raccordée à la station d'emballage par les convoyeurs (9, 14, 22) pour les conteneurs de prélèvement (1) et qui présente un dispositif de renversement (31, 32) pour les conteneurs de prélèvement (1) pour l'exécution d'un mouvement de renversement par rapport à la verticale, puis un dispositif de séparation (33, 34) pour la séparation du conteneur de prélèvement (1) de l'emballage de transport (100).

6. Installation de préparation de commandes et d'emballage conformément à la revendication 5,
**caractérisée en ce que**
l'installation de préparation de commandes et d'emballage présente un dispositif de retour pour les conteneurs de prélèvement (1),
le dispositif de retour pour les conteneurs de prélèvement (1) présentant un deuxième dispositif de renversement (31R) pour les conteneurs de prélèvement (1) pour l'exécution d'un mouvement de renversement par rapport à la verticale.

7. Installation de préparation de commandes et d'emballage conformément à la revendication 5 ou 6,
**caractérisée en ce que**
l'installation de préparation de commandes et d'emballage présente une station de fermeture (40), la station de fermeture (40) étant raccordée à la station de transvasement et de séparation (30) pour la fermeture de l'emballage de transport (100), la station de fermeture (40) présentant de préférence un dispositif de rabattement ou de retournement de l'emballage de transport (100) depuis la face d'ouverture.

8. Installation de préparation de commandes et d'emballage conformément au moins à l'une des revendications 5 à 7,
**caractérisée en ce que**
la station de transfert présente une pluralité de points de transfert (10) auxquels est affectée respectivement une rampe basculante (11) qui relie un niveau du point de transfert (10) à un niveau placé au-dessus d'un dispositif de livraison (15) pour les articles (A), seul ou en relation avec un dispositif de transfert (12) du dispositif de livraison (15) dans un angle d'inclinaison prédéfini, la rampe basculante (11) étant conçue pour soutenir le conteneur de prélèvement (1) dans l'angle d'inclinaison prédéfini, une ouverture (1') du conteneur de prélèvement (1) étant tournée en direction du dispositif de livraison (15) pour la réception des articles (A).

9. Installation de préparation de commandes et d'emballage conformément au moins à l'une des revendications 5 à 8,
**caractérisée en ce que**
l'installation de préparation de commandes et d'emballage présente
- une station d'ajout (19) pour un ajout prédéfini, laquelle est disposée entre la station de transfert (10) et la station d'emballage (20) le long des convoyeurs (9, 14, 22) et/ou
- une station d'étiquetage (29) pour l'étiquetage de l'emballage de transport (100), laquelle est disposée entre la station d'emballage (20) et la station de transvasement et de séparation (30) le long des convoyeurs (9, 14, 22).

10. Installation de préparation de commandes et d'emballage conformément à la revendication 9,
**caractérisée en ce que**
dans le cas d'une station d'ajout (19) existante, l'installation de préparation de commandes et d'emballage présente un dispositif d'impression pour l'impression de formulaires de suivi, le dispositif d'impression étant conçu de telle manière à ce qu'une édition de formulaires se trouve au-dessus d'un niveau défini par l'ouverture (1') des conteneurs de prélèvement (1) acheminés sur les convoyeurs (9, 14, 22).

11. Installation de préparation de commandes et d'emballage conformément au moins à l'une des revendications 5 à 10,
**caractérisée en ce que**
- le dispositif (21) pour la mise à disposition de l'emballage de transport (100) présente un dispositif chargeur avec des porte-cassettes (21') pour des emballages de transport (100) avec des formats différents, un dispositif de sélection pour la sélection et la séparation d'un emballage de transport (100) d'un format défini et un dispositif de serrage et de maintien pour un emballage de transport (100) déployé avec une ouverture (101) tournée vers le bas, et/ou
- le mouvement relatif entre le point d'emballage (20) et le dispositif de mise à disposition de l'emballage de transport (100) étant mis à disposition par au moins un dispositif de levage (13) qui est relié ou qui peut être relié au point d'emballage (20) et/ou au dispositif de mise à disposition de l'emballage de transport (100), le dispositif de levage (13) présentant de préférence au moins un vérin de levage (13), des ciseaux de levage, un dispositif de remontée ou de levage, comprenant au moins un convoyeur circulant.

12. Installation de préparation de commandes et d'emballage conformément au moins à l'une des revendications 5 à 11,
**caractérisée en ce que**
la station de transvasement et de séparation (30) met à disposition, comme dispositif de renversement, une voie en demi-boucle (31) qui assure de préférence un renversement à 180°, avec des moyens de guidage pour le conteneur de prélèvement (1) et une voie de stabilisation (32) circulant en parallèle pour le soutien d'un fond de l'emballage de transport (100),
et/ou **en ce que**
la station de transvasement et de séparation (30) présente, comme dispositif de séparation,
- des voies (33, 34) divergentes par rapport à la verticale pour le guidage du conteneur de prélèvement (1) et de l'emballage de transport (100), la voie supérieure (33) pour le guidage des conteneurs de prélèvement (1) étant raccordée à la voie en demi-boucle (31) et la voie inférieure (34) pour le guidage de l'emballage de transport (100) étant raccordée à la voie de stabilisation (32), la voie supérieure (33) pour le guidage des conteneurs de prélèvement (1) étant conçue de préférence comme rampe montante (33), les moyens de guidage dans la voie en demi-boucle (31) et dans la voie supérieure (33) étant de préférence des rails de guidage latéraux (31') qui sont conçus pour venir en prise avec les dispositifs de roulement (4a, 4b) du conteneur de prélèvement (1) qui sont disposés au niveau du fond sur le côté du conteneur de prélèvement (1)
ou
- un dispositif de levage (36) pour les conteneurs de prélèvement (1) qui est raccordé à la voie en demi-boucle (31), et un point de maintien (36') pour les emballages de transport (100) en dessous du dispositif de levage (36) le long d'une voie de transporteur d'évacuation (34) qui est raccordée à la voie de stabilisation (32), le dispositif de levage (36) présentant de préférence au moins un convoyeur circulant (37, 38) qui est conçu au moins avec un élément de prise (37c, 38b) pour venir en prise avec un conteneur de prélèvement (1) renversé.

13. Installation de préparation de commandes et d'emballage conformément au moins à l'une des revendications 5 à 12,
**caractérisée en ce que**
l'installation de préparation de commandes et d'emballage présente au moins un dispositif de commande qui est relié à tous les dispositifs et convoyeurs de l'installation pour la préparation de commandes et l'emballage consolidé automatique des articles (A) destinés à l'expédition dans un processus continu, les dispositifs et convoyeurs de l'installation étant de préférence équipés, au moins en partie, d'un système de capteurs qui est connecté au moins à un dispositif de commande pour la régulation des processus.

14. Installation de préparation de commandes et d'emballage conformément à la revendication 13,
**caractérisée en ce que**
l'installation de préparation de commandes et d'emballage présente
- un système de capteurs pour l'enregistrement d'une caractéristique d'identification de chaque conteneur de prélèvement (1) pour la station de transfert, la station d'emballage, la station d'ajout (19), la station d'étiquetage (29), la station de fermeture (40) et/ou pour toutes les positions de décision relevant des techniques de convoyage le long des convoyeurs (9, 14, 22) et/ou
- des dispositifs de capteurs (16) pour la station de transfert, en particulier sur les dispositifs de transfert (12), pour l'enregistrement d'un transfert d'article effectué et/ou pour l'enregistrement d'articles (A) passant dans la position de transfert depuis le conteneur de prélèvement (1), et/ou
- un système de capteurs pour le dispositif de mise à disposition de l'emballage de transport (100) sur chaque dispositif chargeur pour le suivi d'un stock d'emballages de transport (100) et pour l'affectation automatique de nouveaux emballages de transport (100), en particulier sur chaque porte-cassette (21') pour la détermination et la régulation du niveau de remplissage et de la position du porte-cassette (21') respectif,
et/ou
- un système de capteurs pour la station de fermeture (40) pour l'enregistrement d'un niveau d'emballages de transport (10) acheminés en vue d'affecter l'emballage de transport (100) respectif en fonction de son format, et/ou
- un capteur de niveau de remplissage pour la station de fermeture (40) pour l'enregistrement du niveau de remplissage d'articles dans l'emballage de transport (100) en vue de déterminer un nombre de rabattements pour la fermeture de l'emballage de transport (100) et d'une affectation aux dispositifs de rabattement ou de retournement de l'emballage de transport (100) correspondants depuis la face d'ouverture.

15. Utilisation d'un conteneur de prélèvement (1) dans une installation de préparation de commandes et d'emballage conformément au moins à l'une des revendications 5 à 13 pour la réalisation d'un procédé conformément au moins à l'une des revendications 1 à 4,
**caractérisée en ce que**
le conteneur de prélèvement (1) présente
- une ouverture (1') qui est inclinée par rapport à une surface de fond du conteneur de prélèvement (1) et
- des dispositifs de roulement (4a, 4b) latéraux au niveau du fond.

16. Utilisation conformément à la revendication 15,
**caractérisée en ce que**
le conteneur de prélèvement (1) présente une structure de base (6) qui présente l'ouverture (1') et qui est disposée dans un dispositif de stabilisation (5) en forme de cuve, agrandissant la surface de pose, lequel met à disposition la surface du fond du conteneur de prélèvement (1) et sur lequel sont disposés les dispositifs de roulement (4a, 4b) latéraux.

17. Utilisation conformément à la revendication 16,
**caractérisée en ce que**
- la structure de base (6) est disposée perpendiculairement à la surface du fond dans le dispositif de stabilisation (5), l'ouverture (1') inclinée par rapport à la surface du fond du conteneur de prélèvement (1) étant mise à disposition par le fait qu'une paroi du conteneur limitant l'ouverture (1') présente un point le plus bas (2a) et un point le plus haut (2b), ou
- la structure de base (6) est disposée en étant inclinée avec un angle (α) prédéfini par rapport à la surface du fond dans le dispositif de stabilisation (5), l'ouverture (1') inclinée par rapport à la surface du fond du conteneur de prélèvement (1) étant mise à disposition avec un bord plus bas (2a') et un bord plus haut (2b').

18. Utilisation conformément au moins à l'une des revendications 15 à 17,
**caractérisée en ce que**
une clavette (8), de préférence dans un matériau élastique amortissant les chocs, est disposée sur le fond dans la structure de base (6).

19. Utilisation conformément à la revendication 18,
**caractérisée en ce que**
une face à angle aigu de la clavette (8) est disposée sur le côté de la structure de base (6) qui présente le point le plus bas (2a) ou le bord plus bas (2a') sur la paroi du conteneur limitant l'ouverture (1').
